(19) Europäisches Patentamt / European Patent Office / Office européen des brevets

(11) **EP 4 074 658 A1**

(12) **EUROPEAN PATENT APPLICATION**
published in accordance with Art. 153(4) EPC

(43) Date of publication:
**19.10.2022  Bulletin 2022/42**

(21) Application number: **20897956.7**

(22) Date of filing: **11.12.2020**

(51) International Patent Classification (IPC):
**C01G 53/00** (2006.01)    **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2020/046372**

(87) International publication number:
**WO 2021/117890 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **13.12.2019  JP 2019225318**

(71) Applicant: **SUMITOMO CHEMICAL COMPANY,
LIMITED
Tokyo 103-6020 (JP)**

(72) Inventors:
• **KAGEURA Jun-ichi**
  **Niihama-shi, Ehime 792-8521 (JP)**
• **MATSUO Yoji**
  **Niihama-shi, Ehime 792-8521 (JP)**
• **HARA Syusaku**
  **Niihama-shi, Ehime 792-8521 (JP)**

(74) Representative: **Vossius & Partner
Patentanwälte Rechtsanwälte mbB
Siebertstraße 3
81675 München (DE)**

(54) **LITHIUM METAL COMPOSITE OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57)    The present invention relates to a lithium metal composite oxide with a layered structure wherein: at least Li, Ni, and an element X are included; the element X is at least one element selected from the group consisting of Co, Mn, Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn; and an average three-dimensional particle unevenness of primary particles with an equivalent spherical diameter of at least 1.0 $\mu$m is at least 1.91 and less than 2.9.

EP 4 074 658 A1

**Description**

[Technical Field]

The present invention relates to a lithium metal composite oxide, a positive electrode active material for a lithium secondary battery, a positive electrode for a lithium secondary battery, and a lithium secondary battery.

Priority is claimed on Japanese Patent Application No. 2019-225318, filed December 13, 2019, the content of which is incorporated herein by reference.

[Background Art]

Lithium secondary batteries have already been put to practical use not only in small power sources for mobile phones, laptop computers and the like, but also in medium-sized or large-sized power sources for automobiles, electricity storage applications and the like. A lithium secondary battery has a positive electrode for a lithium secondary battery provided with a positive electrode active material. A lithium metal composite oxide is used as the positive electrode active material.

Known lithium metal composite oxides are composed of secondary particles formed by agglomeration of primary particles. Attempts have been made to devise the shape of secondary particles in order to improve various battery characteristics such as higher capacity of lithium secondary batteries, improvement in cycle characteristics, and improvement in charge and discharge characteristics.

For example, Patent Document 1 describes a solid type secondary particle in which the interior of the particle is filled.

Patent Document 1 describes that when the degree of sphericity of the particles is high, deterioration of the material due to the volume change of the material caused by the insertion and desorption of lithium ions can be alleviated. Patent Document 1 discloses that the use of such secondary particles improves the cycle characteristics.

[Citation List]

[Patent Document]

[Patent Document 1] JP-A-2006-114408

[Summary of Invention]

[Technical Problem]

Incidentally, in-vehicle batteries such as those for electric vehicles are required to have not only high capacity but also high output, that is, high discharge rate characteristics.

Here, in the present specification, the discharge rate characteristic is expressed as a 10 CA/0.2 CA discharge capacity ratio obtained by the following formula using the discharge capacity when discharged at a constant current of 0.2 CA and the discharge capacity when discharged at a constant current of 10 CA.

The higher the 10 CA/0.2 CA discharge capacity ratio, the higher the discharge rate characteristics, which means that the lithium secondary battery exhibits higher output.

$$10 \text{ CA}/0.2 \text{ CA discharge capacity ratio (\%)}$$
$$= (\text{discharge capacity at } 10 \text{ CA}) / (\text{discharge capacity at } 0.2 \text{ CA}) \times 100$$

The present invention has been made in view of the above circumstances, with an object of providing a lithium metal composite oxide having high discharge rate characteristics, a positive electrode active material for a lithium secondary battery, a positive electrode for a lithium secondary battery, and a lithium secondary battery.

[Solution to Problem]

That is, the present invention includes the following inventions [1] to [10].

[1] A lithium metal composite oxide having a layered structure, and including at least Li, Ni and an element X, wherein the aforementioned element X is at least one element selected from the group consisting of Co, Mn, Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn; and an average three-dimensional particle unevenness of primary particles with an equivalent spherical diameter of at least 1.0 $\mu$m is 1.91 or more and less than 2.9.

[2] The lithium metal composite oxide according to [1], wherein an average value of aspect ratios of the aforementioned primary particles with an equivalent spherical diameter of at least 1.0 $\mu$m is 1.0 or more and 2.3 or less.

[3] The lithium metal composite oxide according to [1] or [2], wherein in a cumulative frequency distribution curve of an equivalent spherical diameter of the aforementioned primary particles, when the total cumulative volume is taken as 100%, a point at which a cumulative frequency reaches 10% is taken as $SD_{10}$, and a point at which a cumulative frequency reaches 50% is taken as $SD_{50}$ from a side with a smaller equivalent spherical diameter, an average value of aspect ratios of primary particles having an equivalent spherical diameter within a range of $SD_{10}$ or more and $SD_{50}$ or less is 1.0 or more and 2.0 or less.

[4] The lithium metal composite oxide according to any one of [1] to [3], wherein in a cumulative frequency distribution curve of an equivalent spherical diameter of the aforementioned primary particles, when the total cumulative volume is taken as 100%, a point at which a cumulative frequency reaches 10% is taken as $SD_{10}$, a point at which a cumulative frequency reaches 50% is taken as $SD_{50}$, and a point at which a cumulative frequency reaches 90% is taken as $SD_{90}$ from a side with a smaller equivalent spherical diameter, an average value of aspect ratios of primary particles having an equivalent spherical diameter within a range of $SD_{50}$ or more and $SD_{90}$ or less is equal to or less than an average value of aspect ratios of primary particles having an equivalent spherical diameter within a range of $SD_{10}$ or more and $SD_{50}$ or less.

[5] The lithium metal composite oxide according to any one of [1] to [4], which satisfies the following formula (I),

$$Li[Li_x(Ni_{(1-y-z-w)}Co_yMn_zX1_w)_{1-x}]O_2 \qquad (I)$$

(wherein $-0.1 \leq x \leq 0.2$, $0 \leq y \leq 0.4$, $0 \leq z \leq 0.4$, $0 \leq w \leq 0.1$, and $0 < y + z + w < 1$ are satisfied, and X1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In and Sn.)

[6] The lithium metal composite oxide according to any one of [1] to [5], wherein in a cumulative frequency distribution curve of an equivalent spherical diameter of the aforementioned primary particles, when the total cumulative volume is taken as 100% and a point at which a cumulative frequency reaches 50% is taken as $SD_{50}$ from a side with a smaller equivalent spherical diameter, $SD_{50}$ is 1.5 $\mu$m or more and 10 $\mu$m or less.

[7] The lithium metal composite oxide according to any one of [1] to [6], wherein in a cumulative frequency distribution curve of an equivalent spherical diameter of the aforementioned primary particles, when the total cumulative volume is taken as 100%, a point at which a cumulative frequency reaches 10% is taken as $SD_{10}$, a point at which a cumulative frequency reaches 50% is taken as $SD_{50}$, and a point at which a cumulative frequency reaches 90% is taken as $SD_{90}$ from a side with a smaller equivalent spherical diameter, $(SD_{90} - SD_{10}) / SD_{50}$ is 0.30 or more and 0.87 or less.

[8] A positive electrode active material for a lithium secondary battery, the positive electrode active material including the lithium metal composite oxide according to any one of [1] to [7].

[9] A positive electrode for a lithium secondary battery, the positive electrode including the positive electrode active material for a lithium secondary battery according to [8].

[10] A lithium secondary battery including the positive electrode for a lithium secondary battery according to [9].

[Advantageous Effects of Invention]

According to the present invention, it is possible to provide a lithium metal composite oxide having high discharge rate characteristics, a positive electrode active material for a lithium secondary battery, a positive electrode for a lithium secondary battery, and a lithium secondary battery.

[Brief Description of Drawings]

FIG. 1A is a schematic configuration diagram showing an example of a lithium secondary battery.
FIG. 1B is a schematic configuration diagram showing an example of a lithium secondary battery.
FIG. 2 is a schematic diagram showing an example of an all-solid-state lithium secondary battery.

[Description of Embodiments]

In the present specification, a metal composite compound is hereinafter referred to as "MCC", a lithium metal composite oxide is hereinafter referred to as "LiMO", and a positive electrode (cathode) active material for lithium secondary batteries is hereinafter referred to as "CAM".

<Definition and measurement method>

The LiMO of the present embodiment includes primary particles, or primary particles and secondary particles.

[Primary particles]

In the present embodiment, the primary particles are defined as follows.
The primary particles are particles having no grain boundaries in appearance when observed at a magnification of 5,000 times using a scanning electron microscope (SEM).
In the present embodiment, the primary particles preferably include single particles. The term "single particle" means a primary particle having a particle diameter of 0.5 $\mu$m or more. In the present embodiment, the single particle is preferably a primary particle having an equivalent spherical diameter of 1.0 $\mu$m or more.

[Secondary particles]

In the present embodiment, the secondary particles are aggregates of primary particles. The LiMO may contain spherical or elliptical secondary particles that are formed by aggregation of several tens or more single particles.
In the present embodiment, a ratio of the number of single particles with respect to the total number of secondary particles contained in the LiMO and the number of primary particles that do not constitute the secondary particles is preferably 20% or more, more preferably 30% or more, and particularly preferably 50% or more. The above ratio of the number of single particles is 100% or less, and preferably 90% or less. The above ratio of the number of single particles is preferably 20% or more and 100% or less, more preferably 30% or more and 90% or less, and still more preferably 50% or more and 90% or less. The above ratio of the number of single particles is calculated from a ratio of $SD_{50}$ described later with respect to a particle size ($D_{50}$) at a cumulative volume of 50% described later ($SD_{50}$ / $D_{50} \times 100$).
The cumulative volume particle size of the LiMO is measured by a laser diffraction scattering method.
As a specific measurement method, first, 0.1 g of a LiMO powder is added to 50 ml of a 0.2% by mass aqueous sodium hexametaphosphate solution to obtain a dispersion liquid in which the LiMO powder is dispersed.
Next, the particle size distribution of the obtained dispersion liquid is measured using a laser diffraction scattering particle size distribution measuring device (for example, Microtrac MT3300EXII manufactured by MicrotracBEL Corporation) to obtain a volume-based cumulative particle size distribution curve.
Further, in the obtained cumulative particle size distribution curve, when the total cumulative volume is taken as 100%, a particle size ($D_{50}$ ($\mu$m)) at a cumulative volume of 50% refers to a value of the particle size at a point where the cumulative volume from the smaller particle side reaches 50%.

[$SD_{10}$, $SD_{50}$, $SD_{90}$]

In the present embodiment, in a volume-based cumulative frequency distribution curve obtained by sequentially integrating primary particles having an equivalent spherical diameter of 1.0 $\mu$m or more from among the primary particles having a smaller equivalent spherical diameter, the equivalent spherical diameter represented by $SD_{10}$ (unit: $\mu$m) means an equivalent spherical diameter when the cumulative frequency from the side with a smaller equivalent spherical diameter reaches 10% when the total cumulative volume is taken as 100%.
In the present embodiment, in a volume-based cumulative particle size distribution curve obtained by sequentially integrating primary particles having an equivalent spherical diameter of 1.0 $\mu$m or more from among the primary particles having a smaller equivalent spherical diameter, the equivalent spherical diameter represented by $SD_{50}$ (unit: $\mu$m) means an equivalent spherical diameter when the cumulative frequency from the side with a smaller equivalent spherical diameter reaches 50% when the total cumulative volume is taken as 100%.
In the present embodiment, in a volume-based cumulative particle size distribution curve obtained by sequentially integrating primary particles having an equivalent spherical diameter of 1.0 $\mu$m or more from among the primary particles having a smaller equivalent spherical diameter, the equivalent spherical diameter represented by $SD_{90}$ (unit: $\mu$m) means an equivalent spherical diameter when the cumulative frequency from the side with a smaller equivalent spherical diameter reaches 90% when the total cumulative volume is taken as 100%.
The volume-based cumulative frequency distribution curve of the equivalent spherical diameter of the LiMO primary particles can be obtained using the equivalent spherical diameter of primary particles, which is obtained by randomly selecting at least 100 particles and calculating the equivalent spherical diameter of primary particles described later for each particle using the three-dimensional quantitative analysis software described later. The number of the above particles can be set to, for example, 100.

[Average three-dimensional particle unevenness]

In the present embodiment, the term "three-dimensional particle unevenness" refers to a shape parameter of one primary particle.

It is a value specified by the following formula (1) based on the volume V ($\mu m^3$) of the primary particle and the volume of a rectangular parallelepiped circumscribing the primary particle (La $\times$ Lb $\times$ Lc (unit: $\mu m^3$)).

$$\text{Three-dimensional particle unevenness} = (\text{La} \times \text{Lb} \times \text{Lc}) / \text{V} \qquad (1)$$

In the formula (1), La is the height of the rectangular parallelepiped circumscribing the primary particle of LiMO. Lb is the vertical length of the bottom surface of the rectangular parallelepiped circumscribing the primary particle of LiMO. Lc is the horizontal length of the bottom surface of the rectangular parallelepiped circumscribing the primary particle of LiMO. V is the volume of the primary particle.

That is, the above La, Lb and Lc mean the lengths of the sides orthogonal to each other in the rectangular parallelepiped circumscribing the primary particle. It should be noted that La $\leq$ Lb $\leq$ Lc. When La = Lb = Lc, the above rectangular parallelepiped is a cube.

Further, the "average three-dimensional particle unevenness" is a value obtained by calculating and averaging each of the three-dimensional particle unevenness of 100 or more primary particles having an equivalent spherical diameter of 1.0 $\mu m$ or more that are contained in LiMO according to the above formula (1). The number of the above primary particles can be set to, for example, 100.

The volume V of the primary particle, the above La value, the above Lb value, and the above Lc value can be obtained by analyzing a continuous slice image of a targeted primary particle using a three-dimensional quantitative analysis software.

As the three-dimensional quantitative analysis software, for example, TRI/3D-PRT (product name) manufactured by Ratoc System Engineering Co., Ltd. can be used.

Further, the continuous slice image of the primary particle can be acquired by using an evaluation sample obtained by curing a particle fixing resin in which a predetermined amount of LiMO powder is dispersed. As the particle fixing resin, for example, an epoxy resin or the like can be used.

More specifically, the continuous slice image is acquired by the following method.

First, 10 parts by weight of LiMO in a powder form is dispersed in 100 parts by weight of a particle fixing resin.

After that, vacuum degassing is performed, and the obtained product is poured into a silicon mold and cured. As a result, a cured product of resin containing LiMO can be obtained.

After fixing the obtained cured product on a stage, a protective film is formed by Pt-Pd deposition.

Next, the obtained product is set in a focused ion beam processing observation device <FIB-SEM [for example, HELIOS600 (product name) manufactured by FEI]>.

After that, a cross section is produced by FIB processing at an acceleration voltage of 30 kV, and the cross section is observed by SEM at an acceleration voltage of 2.1 kV.

After observation, FIB processing is performed to a thickness of 100 nm in the sample depth direction (direction orthogonal to the above cross section) to produce a new cross section, and the cross section is observed by SEM.

With a 100 nm interval, the FIB processing and cross-sectional observation by SEM are repeated as described above at regular intervals to acquire 200 or more continuous images. The acquired image is subjected to position correction using image analysis software [for example, Avizo ver. 6.0 manufactured by Visualization Sciences Group] to obtain a continuous slice image. Scales are set at 105 nm/pix on the X-axis, 105 nm/pix on the Y-axis, and 100 nm/pix on the Z-axis. The number of the above images can be set to, for example, 200.

The obtained continuous slice image is subjected to a three-dimensional quantitative analysis of LiMO using a quantitative analysis software. It should be noted that the above slice image includes cross sections of a plurality of primary particles.

As the quantitative analysis software, for example, TRI/3D-PRT (manufactured by Ratoc System Engineering Co., Ltd.), which is an optional analysis system of TRI/3D-BON-FCS (product name) can be used.

By performing a three-dimensional quantitative analysis by randomly selecting at least 100 particles from the particulate LiMO, the volume V and the values of the above La, Lb and Lc of the primary particles are obtained. The number of the above particles can be set to, for example, 100.

That is, the volume V and shape of each primary particle are obtained by integrating the cross section of each primary particle in the above continuous slice image by three-dimensional quantitative analysis. From the obtained shape of each primary particle, the circumscribed rectangular parallelepiped is determined, and the values of La, Lb and Lc are obtained.

Here, assuming a sphere with radius r, the three-dimensional particle unevenness of the sphere with radius r is calculated as follows.

$$\text{Three-dimensional unevenness of particle with radius } r = (2r \times 2r \times 2r) / (4/3 \times \pi \times r^3)$$

$$= 6 / \pi \ (\approx 1.9098...)$$

In other words, the closer the value of the three-dimensional particle unevenness is to 1.91, the closer to a true sphere.

[Equivalent spherical diameter]

In the present embodiment, the equivalent spherical diameter of a primary particle means the diameter of a sphere when the volume of a certain primary particle (volume V of the primary particle in the present embodiment) is converted into that of a true sphere.

The equivalent spherical diameter ($\varphi$) is obtained by the following calculation formula (2).

$$\text{Equivalent spherical diameter } (\varphi) = 2 \times (3/4 \times V/\pi)^{1/3} \ (2)$$

In the present embodiment, the equivalent spherical diameter of the primary particle can be measured by FIB processing using a focused ion / electron beam device (FIB-SEM).

As the focused ion / electron beam device, for example, HELIOS 600 manufactured by FEI can be used.

In other words, the equivalent spherical diameter can be obtained by substituting the volume V of the primary particle obtained by the above method into the above formula (2).

[Method for calculating aspect ratio]

In the present embodiment, an aspect ratio of a primary particle having an equivalent spherical diameter of at least 1.0 $\mu$m can be calculated by the following method.

First, in a three-dimensional image of the primary particle obtained by combining the continuous slice images with the above-mentioned three-dimensional quantitative analysis software, a major axis 2a (longest diameter) and a minor axis 2c of a rotating body obtained by rotation using an axis corresponding to the longest diameter as the axis of rotation are determined.

Next, a ratio (2a/2c) of the major axis 2a with respect to the minor axis 2c is calculated.

Here, the "major axis 2a" is the length of the above axis of rotation. In other words, the "major axis 2a" is the longest diameter of the above primary particle in the three-dimensional image. The term "minor axis 2c" means the length of the shortest straight line among the straight lines orthogonal to the axis of rotation and passing through the axis of rotation in the above rotating body.

The average value of aspect ratios of the primary particles having an equivalent spherical diameter of at least 1.0 $\mu$m is calculated by calculating the above ratio (2a/2c) for each of 100 or more primary particles having an equivalent spherical diameter of at least 1.0 $\mu$m and obtaining an average value thereof. The number of the above primary particles can be set to, for example, 100.

The average value of aspect ratios of the primary particles having an equivalent spherical diameter within a range of $SD_{10}$ or more and $SD_{50}$ or less is calculated by calculating the above ratio (2a/2c) for each of several tens or more primary particles having an equivalent spherical diameter within a range of $SD_{10}$ or more and $SD_{50}$ or less and obtaining an average value thereof. The number of the above primary particles can be set to, for example, 30.

The average value of aspect ratios of the primary particles having an equivalent spherical diameter within a range of $SD_{50}$ or more and $SD_{90}$ or less is calculated by calculating the above ratio (2a/2c) for each of several tens or more primary particles having an equivalent spherical diameter within a range of $SD_{50}$ or more and $SD_{90}$ or less and obtaining an average value thereof. The number of the above primary particles can be set to, for example, 30.

<LiMO>

The present embodiment describes a LiMO having a layered structure.

The LiMO of the present embodiment contains at least Li, Ni and an element X.

The element X is at least one element selected from the group consisting of Co, Mn, Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In and Sn.

In the present embodiment, the average three-dimensional particle unevenness of the primary particles having an equivalent spherical diameter of at least 1.0 $\mu$m is 1.91 or more and less than 2.9. In the present embodiment, the average three-dimensional particle unevenness of the single particles as defined above is preferably 1.91 or more and less than 2.9.

In the present embodiment, the average three-dimensional particle unevenness of the primary particles having an equivalent spherical diameter of at least 1.0 $\mu$m is preferably 2.8 or less, more preferably 2.7 or less, and particularly preferably 2.6 or less.

When the average three-dimensional particle unevenness is within the above range, the number of contact points between LiMO primary particles in the positive electrode tends to increase when the positive electrode is produced. Alternatively, the ratio of surface contact tends to increase as a form of contact between the primary particles. As a result, the contact area between the primary particles tends to increase. It is considered that since an increase in the electron transfer pathway and the electron transfer frequency is achieved as a result, the discharge rate characteristics improve.

On the contrary, when the average three-dimensional particle unevenness of the primary particles having an equivalent spherical diameter of at least 1.0 $\mu$m is 2.9 or more, the form of contact between the primary particles tends to have a high proportion of point contact. As a result, the contact area between the primary particles decreases, and the resistance during electron transfer tends to increase.

In the present embodiment, it is preferable that the primary particles have few irregularities and have a spherical shape or a shape close to a spherical shape. For this reason, the closer the lower limit value of the average three-dimensional particle unevenness of the primary particles having an equivalent spherical diameter of at least 1.0 $\mu$m is to 1.91, the better.

If the average three-dimensional particle unevenness of the primary particles having an equivalent spherical diameter of at least 1.0 $\mu$m is within a range of 1.91 or more, preferably 2.0 or more, more preferably 2.1 or more, and still more preferably 2.2 or more, the contact area between the primary particles tends to increase.

In the present embodiment, from the viewpoint of improving the discharge rate characteristics, the average three-dimensional particle unevenness of the primary particles having an equivalent spherical diameter of at least 1.0 $\mu$m is preferably 2.0 or more and 2.8 or less, more preferably 2.1 or more and 2.7 or less, and still more preferably 2.2 or more and 2.6 or less.

In the present embodiment, among the primary particles, the primary particles having an equivalent spherical diameter of at least 1.0 $\mu$m are preferably circular in plan view. For this reason, the closer the average value of aspect ratios of the primary particles having an equivalent spherical diameter of at least 1.0 $\mu$m is to 1.0, the better. In the present embodiment, the average value of aspect ratios of the primary particles having an equivalent spherical diameter of at least 1.0 $\mu$m is preferably 1.0 or more and 2.3 or less.

From the viewpoint of controlling and shortening the movement path of lithium ions in the primary particles and facilitating the diffusion of lithium ions, the average value of aspect ratios of the primary particles having an equivalent spherical diameter of at least 1.0 $\mu$m is preferably 2.2 or less, more preferably 2.1 or less, still more preferably 2.0 or less, still more preferably 1.9 or less, and particularly preferably less than 1.8.

The closer the lower limit value of the average value of aspect ratios of the primary particles having an equivalent spherical diameter of at least 1.0 $\mu$m is to 1.0, the better.

If the lower limit value of the average value of aspect ratios of the primary particles having an equivalent spherical diameter of at least 1.0 $\mu$m is preferably 1.1 or more, and more preferably 1.2 or more, the filling properties of LiMO are excellent and the electrode density tends to improve when the electrode described later is produced.

The above upper limit values and lower limit values can be arbitrarily combined.

As an example of the combination, the average value of aspect ratios of the primary particles having an equivalent spherical diameter of at least 1.0 $\mu$m of 1.0 or more and 2.2 or less, 1.1 or more and 2.1 or less, 1.2 or more and 2.0 or less, 1.2 or more and 1.9 or less, 1.2 or more and less than 1.8, and the like can be mentioned.

In the present embodiment, an average value of aspect ratios of the primary particles having an equivalent spherical diameter within a range of $SD_{10}$ or more and $SD_{50}$ or less is preferably 1.0 or more and 2.0 or less, more preferably 1.1 or more and 1.9 or less, and still more preferably 1.2 or more and 1.8 or less.

When the average value of aspect ratios of the primary particles having an equivalent spherical diameter within a range of $SD_{10}$ or more and $SD_{50}$ or less is within the above range, the movement path of lithium ions in the primary particles is short and the ratio of the number of particles easily diffused becomes high. For this reason, the rate characteristics are likely to be improved.

In the present embodiment, the average value of aspect ratios of the single particles having an equivalent spherical diameter within a range of $SD_{10}$ or more and $SD_{50}$ or less is preferably 1.0 or more and 2.0 or less.

In the present embodiment, the average value of aspect ratios of the primary particles having an equivalent spherical diameter within a range of $SD_{50}$ or more and $SD_{90}$ or less is preferably 1.0 or more and 2.0 or less, more preferably 1.1 or more and 1.9 or less, and still more preferably 1.2 or more and 1.8 or less.

When the average value of aspect ratios of the primary particles having an equivalent spherical diameter within a range of $SD_{50}$ or more and $SD_{90}$ or less is within the above range, the filling properties of LiMO particles are excellent and the electrode density tends to improve when the electrode described later is produced.

In the present embodiment, the average value of aspect ratios of the single particles having an equivalent spherical diameter within a range of $SD_{50}$ or more and $SD_{90}$ or less is preferably 1.0 or more and 2.0 or less.

In the present embodiment, an average value (A1) of aspect ratios of the primary particles having an equivalent spherical diameter within a range of $SD_{50}$ or more and $SD_{90}$ or less is preferably equal to or less than an average value (A2) of aspect ratios of the primary particles having an equivalent spherical diameter within a range of $SD_{10}$ or more and $SD_{50}$ or less.

The difference between the average value (A1) and the average value (A2) (represented by a formula: (A2) - (A1)) is preferably 0.5 or less, more preferably 0.2 or less, and still more preferably 0.

When the average value (A1) and the average value (A2) are in the above relationship, the unevenness of reaction ratio of lithium ions at the time of discharge is reduced in each primary particle, and the deterioration due to the reaction unevenness of LiMO can be suppressed when charging and discharging are repeated.

In the present embodiment, $SD_{50}$ is preferably 1.5 $\mu$m or more, more preferably 1.6 $\mu$m or more, and still more preferably 1.7 $\mu$m or more. Further, $SD_{50}$ is preferably 10 $\mu$m or less, more preferably 9 $\mu$m or less, and still more preferably 8 $\mu$m or less.

The above upper limit values and lower limit values of $SD_{50}$ can be arbitrarily combined.

In the present embodiment, $SD_{50}$ is preferably 1.5 $\mu$m or more and 10 $\mu$m or less, more preferably 1.6 $\mu$m or more and 9 $\mu$m or less, and still more preferably 1.7 $\mu$m or more and 8 $\mu$m or less.

In the present embodiment, $SD_{10}$ is preferably 1.2 $\mu$m or more, more preferably 1.5 $\mu$m or more, and still more preferably 1.7 $\mu$m or more. Further, $SD_{10}$ is preferably 2.5 $\mu$m or less, more preferably 2.3 $\mu$m or less, and still more preferably 2.1 $\mu$m or less.

The above upper limit values and lower limit values of $SD_{10}$ can be arbitrarily combined.

In the present embodiment, $SD_{10}$ is preferably 1.2 $\mu$m or more and 2.5 $\mu$m or less, more preferably 1.5 $\mu$m or more and 2.3 $\mu$m or less, and still more preferably 1.7 $\mu$m or more and 2.1 $\mu$m or less.

In the present embodiment, $SD_{90}$ is preferably 3.5 $\mu$m or more, more preferably 3.7 $\mu$m or more, and still more preferably 3.9 $\mu$m or more. Further, $SD_{90}$ is preferably 7.0 $\mu$m or less, more preferably 6.5 $\mu$m or less, and still more preferably 6.0 $\mu$m or less.

The above upper limit values and lower limit values of $SD_{90}$ can be arbitrarily combined.

In the present embodiment, $SD_{90}$ is preferably 3.5 $\mu$m or more and 7.0 $\mu$m or less, more preferably 3.7 $\mu$m or more and 6.5 $\mu$m or less, and still more preferably 3.9 $\mu$m or more and 6.0 $\mu$m or less.

In the present embodiment, a ratio $(SD_{90} - SD_{10}) / SD_{50}$ is preferably 0.30 or more, more preferably 0.4 or more, and still more preferably 0.5 or more. Further, the ratio $(SD_{90} - SD_{10}) / SD_{50}$ is preferably 0.87 or less, more preferably 0.86 or less, still more preferably 0.85 or less, and particularly preferably less than 0.82.

The above upper limit values and lower limit values of the ratio $(SD_{90} - SD_{10}) / SD_{50}$ can be arbitrarily combined.

As an example of the combination, the ratio $(SD_{90} - SD_{10}) / SD_{50}$ is preferably 0.30 or more and 0.87 or less, more preferably 0.4 or more and 0.86 or less, still more preferably 0.5 or more and 0.86 or less, and particularly preferably 0.5 or more and less than 0.82.

<<Composition formula>>

The LiMO of the present embodiment preferably satisfies the following formula (I).

$$Li[Li_x(Ni_{(1 - y - z - w)}Co_yMn_zX1_w)_{1 - x}]O_2 \qquad (I)$$

(wherein $-0.1 \leq x \leq 0.2$, $0 \leq y \leq 0.4$, $0 \leq z \leq 0.4$, $0 \leq w \leq 0.1$, and $0 < y + z + w < 1$ are satisfied, and X1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In and Sn.)

(x)

From the viewpoint of obtaining a lithium secondary battery having high cycle characteristics, x in the above composition formula (I) is preferably more than 0, more preferably 0.01 or more, and still more preferably 0.02 or more. Further, from the viewpoint of obtaining a lithium secondary battery having a higher initial coulombic efficiency, x in the above composition formula (I) is preferably 0.15 or less, and more preferably 0.10 or less.

It should be noted that in the present specification, the expression "high cycle characteristic" means a characteristic that the amount of decrease in battery capacity due to repeated charging and discharging is low, and means that the capacity ratio at the time of remeasurement with respect to the initial capacity is unlikely to decrease.

Further, in the present specification, the term "initial coulombic efficiency" refers to a value obtained by a formula: "(initial discharge capacity) / (initial charge capacity) $\times$ 100 (%)". A secondary battery having a high initial coulombic efficiency has a small irreversible capacity at the time of initial charging and discharging, and tends to have a larger capacity per volume and weight.

The upper limit values and lower limit values of x can be arbitrarily combined. In the above composition formula (I), x may be -0.1 or more and 0.15 or less, or may be - 0.1 or more and 0.10 or less.

x may be more than 0 and 0.20 or less, may be more than 0 and 0.15 or less, or may be more than 0 and 0.10 or less.

x may be 0.01 or more and 0.20 or less, may be 0.01 or more and 0.15 or less, or may be 0.01 or more and 0.10 or less.

x may be 0.02 or more and 0.2 or less, may be 0.02 or more and 0.15 or less, or may be 0.02 or more and 0.10 or less.

In the present embodiment, it is preferable that $0 < x \leq 0.20$.

(y)

Further, from the viewpoint of obtaining a lithium secondary battery having a low internal resistance of the battery, y in the above composition formula (I) is preferably more than 0, more preferably 0.005 or more, still more preferably 0.01 or more, and particularly preferably 0.05 or more. Moreover, from the viewpoint of obtaining a lithium secondary battery having high thermal stability, y in the above composition formula (I) is preferably 0.35 or less, more preferably 0.33 or less, and still more preferably 0.30 or less.

The upper limit values and lower limit values of y can be arbitrarily combined. In the above composition formula (I), y may be 0 or more and 0.35 or less, may be 0 or more and 0.33 or less, or may be 0 or more and 0.30 or less.

y may be more than 0 and 0.40 or less, may be more than 0 and 0.35 or less, may be more than 0 and 0.33 or less, or may be more than 0 and 0.30 or less.

y may be 0.005 or more and 0.40 or less, may be 0.005 or more and 0.35 or less, may be 0.005 or more and 0.33 or less, or may be 0.005 or more and 0.30 or less.

y may be 0.01 or more and 0.40 or less, may be 0.01 or more and 0.35 or less, may be 0.01 or more and 0.33 or less, or may be 0.01 or more and 0.30 or less.

y may be 0.05 or more and 0.40 or less, may be 0.05 or more and 0.35 or less, may be 0.05 or more and 0.33 or less, or may be 0.05 or more and 0.30 or less.

In the present embodiment, it is preferable that $0 < y \leq 0.40$.

In the present embodiment, in the composition formula (I), it is more preferable that $0 < x \leq 0.10$ and $0 < y \leq 0.40$.

(z)

Further, from the viewpoint of obtaining a lithium secondary battery having high cycle characteristics, z in the above composition formula (I) is preferably 0.01 or more, more preferably 0.02 or more, and still more preferably 0.1 or more. Moreover, from the viewpoint of obtaining a lithium secondary battery having high storage stability at a high temperature (for example, in an environment of 60°C), z in the above composition formula (I) is preferably 0.39 or less, more preferably 0.38 or less, and still more preferably 0.35 or less.

The upper limit values and lower limit values of z can be arbitrarily combined. In the above composition formula (I), z may be 0 or more and 0.39 or less, may be 0 or more and 0.38 or less, or may be 0 or more and 0.35 or less.

z may be 0.01 or more and 0.40 or less, may be 0.01 or more and 0.39 or less, may be 0.01 or more and 0.38 or less, or may be 0.01 or more and 0.35 or less.

z may be 0.02 or more and 0.40 or less, may be 0.02 or more and 0.39 or less, may be 0.02 or more and 0.38 or less, or may be 0.02 or more and 0.35 or less.

z may be 0.10 or more and 0.40 or less, may be 0.10 or more and 0.39 or less, may be 0.10 or more and 0.38 or less, or may be 0.10 or more and 0.35 or less.

(w)

Further, from the viewpoint of obtaining a lithium secondary battery having a low internal resistance of the battery, w in the above composition formula (I) is preferably more than 0, more preferably 0.0005 or more, and still more preferably 0.001 or more. Moreover, from the viewpoint of obtaining a lithium secondary battery having a high discharge capacity at a high current rate, w in the above composition formula (I) is preferably 0.09 or less, more preferably 0.08 or less, and still more preferably 0.07 or less.

The upper limit values and lower limit values of w can be arbitrarily combined. In the above composition formula (I), w may be 0 or more and 0.09 or less, may be 0 or more and 0.08 or less, or may be 0 or more and 0.07 or less.

w may be more than 0 and 0.10 or less, may be more than 0 and 0.09 or less, may be more than 0 and 0.08 or less, or may be more than 0 and 0.07 or less.

w may be 0.0005 or more and 0.10 or less, may be 0.0005 or more and 0.09 or less, may be 0.0005 or more and 0.08 or less, or may be 0.0005 or more and 0.07 or less.

w may be 0.001 or more and 0.10 or less, may be 0.001 or more and 0.09 or less, may be 0.001 or more and 0.08 or less, or may be 0.001 or more and 0.07 or less.

(y + z + w)

Further, from the viewpoint of obtaining a lithium secondary battery having a large battery capacity, in the present embodiment, y + z + w in the above composition formula (I) is preferably more than 0 and 0.50 or less, more preferably more than 0 and 0.48 or less, and still more preferably more than 0 and 0.46 or less.

(X1)

X1 in the above composition formula (I) represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In and Sn.

Further, from the viewpoint of obtaining a lithium secondary battery having high cycle characteristics, X1 in the composition formula (I) is preferably one or more elements selected from the group consisting of Ti, Mg, Al, W, B and Zr, and more preferably one or more elements selected from the group consisting of Al and Zr. Moreover, from the viewpoint of obtaining a lithium secondary battery having high thermal stability, X1 is preferably one or more elements selected from the group consisting of Ti, Al, W, B and Zr.

In an example of a preferable combination of x, y, z and w described above, x is 0.02 or more and 0.10 or less, y is 0.05 or more and 0.30 or less, z is 0.02 or more and 0.35 or less, and w is 0 or more and 0.07 or less. For example, a LiMO in which x = 0.05, y = 0.20, z = 0.30 and w = 0, a LiMO in which x = 0.05, y = 0.08, z = 0.04 and w = 0, and a LiMO in which x = 0.025, y = 0.07, z = 0.02 and w = 0 can be mentioned.

The composition analysis of LiMO can be measured using an ICP emission spectrophotometer. As the ICP emission spectrophotometer, for example, SPS3000 manufactured by SII NanoTechnology Inc. can be used.

(Layered structure)

In the present embodiment, the crystal structure of LiMO is a layered structure, and is more preferably a hexagonal crystal structure or a monoclinic crystal structure.

The hexagonal crystal structure belongs to any one of the space groups selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm and $P6_3$/mmc.

Further, the monoclinic crystal structure belongs to any one of space groups selected from the group consisting of P2, $P2_1$, C2, Pm, Pc, Cm, Cc, P2/m, $P2_1$/m, C2/m, P2/c, $P2_1$/c and C2/c.

Of these, in order to obtain a lithium secondary battery with a high discharge capacity, the crystal structure is particularly preferably a hexagonal crystal structure belonging to a space group of R-3m or a monoclinic crystal structure belonging to a space group of C2/m.

The crystal structure of LiMO can be confirmed by X-ray diffraction measurement of LiMO powder.

<Method for producing LiMO>

A method for producing LiMO according to the present embodiment will be described.

The method for producing LiMO according to the present embodiment is preferably a production method including the following steps (1), (2), and (3) in this order.

(1) A step of producing a precursor of LiMO.

(2) A mixing step of mixing the above precursor and a lithium compound to obtain a mixture.

(3) A step of calcining the above mixture to obtain LiMO.

[(1) Step of producing precursor of LiMO]

First, a nickel-containing MCC that contains a metal other than lithium, that is, nickel as an essential metal and an element X is prepared. As the nickel-containing MCC serving as a precursor, a nickel-containing metal composite hydroxide or a nickel-containing metal composite oxide can be used.

The precursor can be produced by a commonly known coprecipitation method. As the coprecipitation method, a batch coprecipitation method or a continuous coprecipitation method can be used.

Hereinafter, a method for producing a precursor will be described in detail, using as an example a nickel cobalt manganese metal composite hydroxide (hereinafter, may be described as "metal composite hydroxide") containing nickel and, as the element X, cobalt and manganese.

First, using a coprecipitation method, particularly a continuous coprecipitation method described in JP-A-2002-201028, a nickel salt solution, a cobalt salt solution, a manganese salt solution and a complexing agent are allowed to react to produce a metal composite hydroxide represented by $Ni_{(1-y-z)}Co_yMn_z(OH)_2$ (in the formula, $0 \leq y \leq 0.4$, $0 \leq z \leq 0.4$, and $y + z < 1$).

Although there is no particular limitation with respect to a nickel salt as a solute in the above nickel salt solution, for example, any one or more of nickel sulfate, nickel nitrate, nickel chloride and nickel acetate can be used.

As a cobalt salt as a solute in the above cobalt salt solution, for example, any one or more of cobalt sulfate, cobalt nitrate, cobalt chloride and cobalt acetate can be used.

As a manganese salt as a solute in the above manganese salt solution, for example, any one or more of manganese sulfate, manganese nitrate, manganese chloride and manganese acetate can be used.

The above metal salts are used in a ratio corresponding to the composition ratio of the above $Ni_{(1-y-z)}Co_yMn_z(OH)_2$. That is, the amount of each metal salt is specified so that the molar ratios of nickel in the solute of the nickel salt solution, cobalt in the solute of the cobalt salt solution and manganese in the solute of the manganese salt solution correspond to $(1 - y - z): y: z$ of the above formula of LiMO.

Further, the solvent for the nickel salt solution, cobalt salt solution and manganese salt solution is water.

The complexing agent is a compound capable of forming a complex with nickel ions, cobalt ions and manganese ions in an aqueous solution.

Examples of the complexing agent include an ammonium ion donor (such as ammonium sulfate, ammonium chloride, ammonium carbonate and ammonium fluoride), hydrazine, ethylenediaminetetraacetic acid, nitrilotriacetic acid, uracildiacetic acid and glycine.

A complexing agent may or may not be used in the step of producing a precursor. When a complexing agent is used, the amount of the complexing agent contained in a mixture solution containing the nickel salt solution, the salt solution of the element X and the complexing agent is preferably, for example, more than 0 and equal to or less than 2.0 in terms of a molar ratio with respect to the total number of moles of the nickel salt and the salt of the element X.

In the coprecipitation method, in order to adjust the pH value of the mixture solution containing the nickel salt solution, the salt solution of the element X and the complexing agent, an alkali metal hydroxide is added to the mixture solution before the pH of the mixture solution changes from alkaline to neutral. The alkali metal hydroxide may be, for example, sodium hydroxide or potassium hydroxide.

It should be noted that the pH value in the present specification is defined as a value measured when the temperature of the mixture solution is 40°C. The pH of the mixture solution is measured when the temperature of the mixture solution sampled from the reaction vessel reaches 40°C.

When the complexing agent is successively supplied to the reaction vessel in addition to the above nickel salt solution, cobalt salt solution and manganese salt solution, nickel, cobalt, and manganese react with each other to generate $Ni_{(1-y-z)}Co_yMn_z(OH)_2$.

During the reaction, the temperature of the reaction vessel is controlled within a range of, for example, 20°C or higher and 70°C or lower, and preferably 30°C or higher and 60°C or lower.

The pH value in the reaction vessel is controlled within a range of, for example, pH 9 or more and pH 13 or less, and preferably pH 10 or more and pH 12.5 or less, when the temperature of the aqueous solution in the reaction vessel is 40°C.

The materials in the reaction vessel are appropriately stirred. As the reaction vessel, a type of reaction vessel that overflows can be used to separate the precipitated reaction product.

It is preferable that an inert atmosphere is maintained inside the reaction vessel. When an inert atmosphere is maintained inside the reaction vessel, it is possible to prevent the metals contained in the mixture solution that are more susceptible to oxidation than nickel from aggregating before nickel. Therefore, a uniform metal composite hydroxide can be obtained.

By maintaining an inert atmosphere inside the reaction vessel, controlling the temperature of the reaction vessel to 20°C or higher and 70°C or lower, and controlling the pH in the reaction vessel to 9 or higher and pH 13 or lower in the presence of a complexing agent, a precursor whose tap density is controlled within a range described later can be easily obtained.

After the above reaction, the obtained reaction precipitate is washed and then dried to isolate a nickel cobalt manganese metal composite hydroxide as a nickel cobalt manganese composite compound. Further, if necessary, it may be washed with weak acid water or an alkaline solution containing sodium hydroxide or potassium hydroxide. It should be noted that although a nickel cobalt manganese composite hydroxide is produced in the above example, a nickel cobalt manganese composite oxide may be produced instead. For example, a nickel cobalt manganese composite oxide can be prepared by calcination of a nickel cobalt manganese composite hydroxide.

The drying time is preferably 1 hour or more and 30 hours or less in total from the start of temperature increase to the end of temperature maintenance. The rate of temperature increase in the heating step to reach the maximum holding temperature is preferably 180°C/hour or more, more preferably 200°C/hour or more, and particularly preferably 250°C/hour or more.

For the above isolation, a method of dehydrating a slurry (coprecipitated slurry) containing a reaction precipitate by centrifugation, suction filtration or the like is preferably used.

The coprecipitate obtained after the above dehydration operation is preferably washed with water or an alkali-containing washing liquid. In the present embodiment, it is preferable to wash with an alkali-containing washing liquid, and it is more preferable to wash with a sodium hydroxide solution. Further, washing may be performed using a washing liquid containing a sulfur element. Examples of the washing liquid containing a sulfur element include an aqueous sulfate solution of potassium or sodium.

The isolated nickel cobalt manganese metal composite hydroxide is preferably sieved. By the sieving treatment, excessively aggregated particles can be removed, and a precursor whose tap density is controlled within the range described later can be easily obtained. In addition, since the nickel cobalt manganese metal composite hydroxide obtained without using a complexing agent tends to have a high proportion of excessively aggregated particles, the aggregated particles can be removed and a precursor whose tap density is controlled within the range described later can be easily obtained by crushing the particles before sieving.

In the present embodiment, the tap density of the obtained precursor is preferably within a range of 1.10 g/cc or more and 2.50 g/cc or less. When such a high density precursor is used, it is likely to be sintered into a spherical shape when calcined with a lithium compound. As a result, the average three-dimensional particle unevenness of the primary particles having an equivalent spherical diameter of at least 1.0 $\mu$m in LiMO can be controlled within the above range of the present embodiment.

The tap density of the precursor is preferably 1.30 g/cc or more, more preferably 1.50 g/cc or more, and still more preferably 1.60 g/cc or more. The tap density of the precursor is preferably 2.50 g/cc or less. When a precursor having a high tap density is used, it is easy to control the average three-dimensional particle unevenness of the primary particles having an equivalent spherical diameter of at least 1.0 $\mu$m in LiMO within the above range of the present embodiment. On the other hand, when the tap density of the precursor is smaller than the above range, the average three-dimensional particle unevenness of the primary particles having an equivalent spherical diameter of at least 1.0 $\mu$m in LiMO tends to be larger than the value of the present embodiment as described above. The tap density of the precursor can be measured by the method described in JIS R 1628-1997.

[(2) Mixing step of mixing the above precursor and a lithium compound to obtain a mixture]

This step is a step of mixing a lithium compound and a precursor to obtain a mixture.

- Lithium compound

As the lithium compound used in the present embodiment, a mixture of any one of lithium carbonate, lithium nitrate, lithium acetate, lithium hydroxide, lithium oxide, lithium chloride and lithium fluoride, or mixture thereof can be used. Among these, either one or both of lithium hydroxide and lithium carbonate is preferable.

Further, when the lithium compound contains lithium carbonate, the content of lithium carbonate in the lithium compound is preferably 5% by mass or less.

A method for mixing the above precursor and the above lithium compound will be described.

The precursor is dried, and then mixed with the lithium compound. The drying conditions are not particularly limited, and examples thereof include any of the following drying conditions 1) to 3).

1) A condition in which the precursor is not oxidized or reduced.

More specifically, it is a drying condition in which an oxide is maintained as an oxide, or a drying condition in which a hydroxide is maintained as a hydroxide.

2) A condition in which the precursor is oxidized.

More specifically, it is a drying condition for oxidation from a hydroxide to an oxide.

3) A condition in which the precursor is reduced.

More specifically, it is a drying condition for reduction from an oxide to a hydroxide.

The drying conditions 1) to 3) may be appropriately selected depending on whether the nickel-containing MCC to be produced is either a nickel-containing metal composite hydroxide or a nickel-containing metal composite oxide.

As a condition in which the precursor is not oxidized or reduced, it may be dried using an inert gas such as nitrogen, helium and argon. In a condition in which the nickel-containing metal composite hydroxide as a precursor is oxidized, oxygen or air may be used.

Further, as a condition in which the precursor is reduced, it may be dried using a reducing agent such as hydrazine or sodium sulfite in an inert gas atmosphere.

After drying the precursor, classification may be performed as appropriate.

[(3) Step of calcining the above mixture to obtain LiMO]

In the present embodiment, a mixture of the above lithium compound and the precursor is calcined in the presence of an inert melting agent. By calcining in the presence of an inert melting agent using the precursor having the tap density described above, LiMO particles having the average three-dimensional particle unevenness of the present application can be obtained.

The inert melting agent that can be used in the present embodiment is not particularly limited as long as it is unlikely to react with the mixture during calcination. In the present embodiment, examples thereof include at least one selected from the group consisting of a fluoride of one or more elements selected from the group consisting of Na, K, Rb, Cs, Ca, Mg, Sr and Ba (hereinafter referred to as "A"), a chloride of A, a carbonate of A, a sulfate of A, a nitrate of A, a phosphate of A, a hydroxide of A, a molybdate of A and a tungstate of A.

Examples of the fluoride of A include NaF (melting point: 993°C), KF (melting point: 858°C), RbF (melting point: 795°C), CsF (melting point: 682°C), $CaF_2$ (melting point: 1,402°C), $MgF_2$ (melting point: 1,263°C), $SrF_2$ (melting point: 1,473°C) and $BaF_2$ (melting point: 1,355°C).

Examples of the chloride of A include NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C) and $BaCl_2$ (melting point: 963°C).

Examples of the carbonate of A include $Na_2CO_3$ (melting point: 854°C), $K_2CO_3$ (melting point: 899°C), $Rb_2CO_3$ (melting point: 837°C), $Cs_2CO_3$ (melting point: 793°C), $CaCO_3$ (melting point: 825°C), $MgCO_3$ (melting point: 990°C), $SrCO_3$ (melting point: 1,497°C) and $BaCO_3$ (melting point: 1,380°C).

Examples of the sulfate of A include $Na_2SO_4$ (melting point: 884°C), $K_2SO_4$ (melting point: 1,069°C), $Rb_2SO_4$ (melting point: 1,066°C), $Cs_2SO_4$ (melting point: 1,005°C), $CaSO_4$ (melting point: 1,460°C), $MgSO_4$ (melting point: 1,137°C), $SrSO_4$ (melting point: 1,605°C) and $BaSO_4$ (melting point: 1,580°C).

Examples of the nitrate of A include $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C) and $Ba(NO_3)_2$ (melting point: 596°C).

Examples of the phosphate of A include $Na_3PO_4$, $K_3PO_4$ (melting point: 1,340°C), $Rb_3PO_4$, $Cs_3PO_4$, $Ca_3(PO_4)_2$, $Mg_3(PO_4)_2$ (melting point: 1,184°C), $Sr_3(PO_4)_2$ (melting point: 1,727°C) and $Ba_3(PO_4)_2$ (meting point: 1,767°C).

Examples of the hydroxide of A include NaOH (melting point: 318°C), KOH (melting point: 360°C), RbOH (melting point: 301°C), CsOH (melting point: 272°C), Ca(OH)2 (melting point: 408°C), $Mg(OH)_2$ (melting point: 350°C), Sr(OH)2 (melting point: 375°C) and $Ba(OH)_2$ (melting point: 853°C).

Examples of the molybdate of A include $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1,520°C), $MgMoO_4$ (melting point: 1,060°C), $SrMoO_4$ (melting point: 1,040°C) and $BaMoO_4$ (melting point: 1,460°C).

Examples of the tungstate of A include $Na_2WO_4$ (melting point: 687°C), $K_2WO_4$, $Rb_2WO_4$, $Cs_2WO_4$, $CaWO_4$, $MgWO_4$, $SrWO_4$ and $BaWO_4$.

In the present embodiment, it is also possible to use two or more of these inert melting agents. When two or more inert melting agents are used, the melting point may be lowered. Further, among these inert melting agents, the inert melting agent for obtaining LiMO having higher crystallinity is preferably any one or combination of a hydroxide, carbonate, sulfate and chloride of A. Moreover, A is preferably either one or both of sodium (Na) and potassium (K). That is, among the above, the inert melting agent is particularly preferably at least one selected from the group consisting of NaOH, KOH, NaCl, KCl, $Na_2CO_3$, $K_2CO_3$, $Na_2SO_4$ and $K_2SO_4$.

In the present embodiment, the inert melting agent is preferably $K_2SO_4$, $Na_2SO_4$, $K_2CO_3$ or $Na_2CO_3$.

The lithium compound and the precursor are mixed at a mixing ratio in consideration of the composition ratio of the final target product. More specifically, it is preferable to mix them so that a ratio ($M_{Li}/M_{Me}$) of the amount of substance ($M_{Li}$) of lithium contained in the lithium compound with respect to the amount of substance ($M_{Me}$) of a metal component contained in the MCC which is the precursor is 1.05 or more and 1.30 or less. By setting the ratio within the above range, the lithium compound and the inert melting agent easily form a melt at the time of calcination described later, and it is easy to obtain LiMO in which the average value of aspect ratios of the primary particles having an equivalent spherical diameter of 1.0 $\mu$m, the average value of aspect ratios of the primary particles having an equivalent spherical diameter within a range of $SD_{50}$ or more and $SD_{90}$ or less and the average value of aspect ratios of the primary particles having an equivalent spherical diameter within a range of $SD_{10}$ or more and $SD_{50}$ or less are within the ranges of the above embodiment.

From the viewpoint of obtaining LiMO having a uniform composition, the $M_{Li}/M_{Me}$ ratio is preferably 1.07 or more, and more preferably 1.10 or more. Further, the $M_{Li}/M_{Me}$ ratio is preferably 1.27 or less, and more preferably 1.25 or less.

The upper limit values and lower limit values of the above $M_{Li}/M_{Me}$ ratio can be arbitrarily combined. The $M_{Li}/M_{Me}$ ratio is preferably 1.07 or more and 1.27 or less, and more preferably 1.10 or more and 1.25 or less.

As for the mixing ratio of the inert melting agent, a ratio of the amount of substance of the inert melting agent with respect to the sum (100 mol%) of the amount of substance of the lithium compound as the raw material and the amount of substance of the inert melting agent is preferably 2 mol% or more and 30 mol% or less. By mixing the inert melting agent within the above range, followed by calcination, it is easy to obtain LiMO in which the average three-dimensional particle unevenness of the primary particles having an equivalent spherical diameter of at least 1.0 $\mu$m is within the above range of the present embodiment.

The inert melting agent may remain in LiMO after calcination, or may be removed by washing with a washing liquid or the like after calcination. In the present embodiment, it is preferable to wash LiMO after calcination with pure water, an alkaline washing liquid or the like.

The higher the calcination temperature, the larger the particle size of the primary particles tends to be. The calcination temperature may be appropriately adjusted depending on the type of transition metal element to be used and the types and amounts of precipitant and inert melting agent.

In the present embodiment, the calcination temperature may be set in consideration of the melting point of the inert melting agent, and is preferably set within a range of the melting point of the inert melting agent minus 200°C or higher and the melting point of the inert melting agent plus 200°C or lower.

More specifically, the calcination temperature may be within a range of 200°C or higher and 1,150°C or lower, preferably 300°C or higher and 1,050°C or lower, and more preferably 500°C or higher and 1,000°C or lower.

When the calcination temperature is equal to or higher than the above lower limit value, LiMO having a solid crystal structure can be obtained. Further, when the calcination temperature is equal to or less than the above upper limit value, the volatilization of lithium at the surface of the primary particles or the surface of the secondary particles can be reduced.

The calcination temperature in the present specification means the temperature of an atmosphere in the calcining furnace, and is the maximum holding temperature in the present calcination step (hereinafter, may be referred to as the maximum holding temperature). In the case of the present calcination step that includes a plurality of heating steps, it means the temperature when heating at the maximum holding temperature in each heating step.

Further, in the case of calcination in the presence of an inert melting agent, the lower the calcination temperature, the smaller the average value of aspect ratios of the obtained LiMO tends to be, and the higher the calcination temperature, the larger the average value of LiMO aspect ratios tends to be. From the viewpoint of controlling the average value of aspect ratios of the obtained LiMO within the above range of the present embodiment, the calcination temperature is preferably 750°C or higher, and more preferably 780°C or higher. Further, the calcination temperature is preferably 980°C or lower, and more preferably 970°C or lower.

It should be noted that the above expression "average value of aspect ratios of LiMO" refer to the average value of aspect ratios of the primary particles having an equivalent spherical diameter of 1.0 $\mu$m, the average value of aspect ratios of the primary particles having an equivalent spherical diameter within a range of $SD_{50}$ or more and $SD_{90}$ or less and the average value of aspect ratios of the primary particles having an equivalent spherical diameter within a range of $SD_{10}$ or more and $SD_{50}$ or less, of LiMO.

The holding time during calcination may be appropriately adjusted depending on the type of transition metal element to be used and the types and amounts of precipitant and inert melting agent.

More specifically, the time for holding the above calcination temperature may be 0.1 hour or more and 20 hours or less, and is preferably 0.5 hours or more and 10 hours or less. The rate of temperature increase to the above calcination temperature is usually 50°C/hour or more and 400°C/hour or less, and the rate of temperature decrease from the above calcination temperature to room temperature is usually 10°C/hour or more and 400°C/hour or less. Further, as the atmosphere for calcination, air, oxygen, nitrogen, argon or a mixed gas thereof can be used.

In the present embodiment, the rate of temperature increase in the heating step to reach the maximum holding temperature is preferably 180°C/hour or more, more preferably 200°C/hour or more, and particularly preferably 250°C/hour or more.

The rate of temperature increase in the heating step to reach the maximum holding temperature is calculated from the time ranging from the onset of temperature increase up to a point reaching the holding temperature to be described later in a calcining apparatus.

Pure water or an alkaline washing liquid can be used for washing the inert melting agent remaining in the calcined product obtained after calcination.

Examples of the alkaline washing liquid include an aqueous solution of one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate) and $(NH_4)_2CO_3$ (ammonium carbonate), and hydrates thereof. Further, ammonia can also be used as an alkali.

The temperature of the washing liquid used for washing is preferably 15°C or lower, more preferably 10°C or lower, and still more preferably 8°C or lower. By controlling the temperature of the washing liquid within the above range so as not to freeze, it is possible to suppress excessive elution of lithium ions from the crystal structure of the calcined product into the washing liquid during washing.

In the washing step, examples of a method for bringing the washing liquid into contact with the calcined product include the following methods.

1) A method in which a calcined product is put into an aqueous solution of each washing liquid, followed by stirring.
2) A method in which an aqueous solution of each washing liquid is poured onto a calcined product as a shower of water.
3) A method in which a calcined product is put into an aqueous solution of each washing liquid , followed by stirring, then the calcined product is separated from the aqueous solution of each washing liquid, and then the aqueous solution of each washing liquid is poured onto the calcined product as a shower of water after separation.

It is preferable to carry out a dehydration treatment after washing to obtain a wet cake.

[Heat treatment step]

In the present embodiment, the obtained wet cake is preferably subjected to a heat treatment.

The heat treatment temperature is preferably 500°C or higher, more preferably 600°C or higher, and particularly preferably 700°C or higher. Further, the heat treatment temperature is preferably 900°C or lower, more preferably 850°C or lower, and particularly preferably 800°C or lower.

[Crushing step]

After calcination, the obtained LiMO may be crushed.

The crushing step is preferably carried out using an air flow type mill, a collision type mill with a classification mechanism, a pin mill, a ball mill, a jet mill, a counter jet mill with a classification rotor, or the like.

<CAM>

The present embodiment describes a CAM containing the LiMO of the present invention. The content ratio of LiMO with respect to the total mass (100% by mass) of CAM is preferably 70% by mass or more and 99% by mass or less, and more preferably 80% by mass or more and 98% by mass or less.

<Lithium secondary battery>

Next, a configuration of a suitable lithium secondary battery when the LiMO of the present embodiment is used as a CAM will be described.

Further, a suitable positive electrode for a lithium secondary battery (hereinafter, may be referred to as a positive electrode) when the LiMO of the present embodiment is used as a CAM will be described.

Furthermore, a lithium secondary battery as a suitable use of a positive electrode will be described.

In an example, a suitable lithium secondary battery when the LiMO of the present embodiment is used as a CAM includes a positive electrode and a negative electrode, a separator sandwiched between the positive electrode and the negative electrode, and an electrolytic solution disposed between the positive electrode and the negative electrode.

In an example, the lithium secondary battery includes a positive electrode and a negative electrode, a separator sandwiched between the positive electrode and the negative electrode, and an electrolytic solution disposed between the positive electrode and the negative electrode.

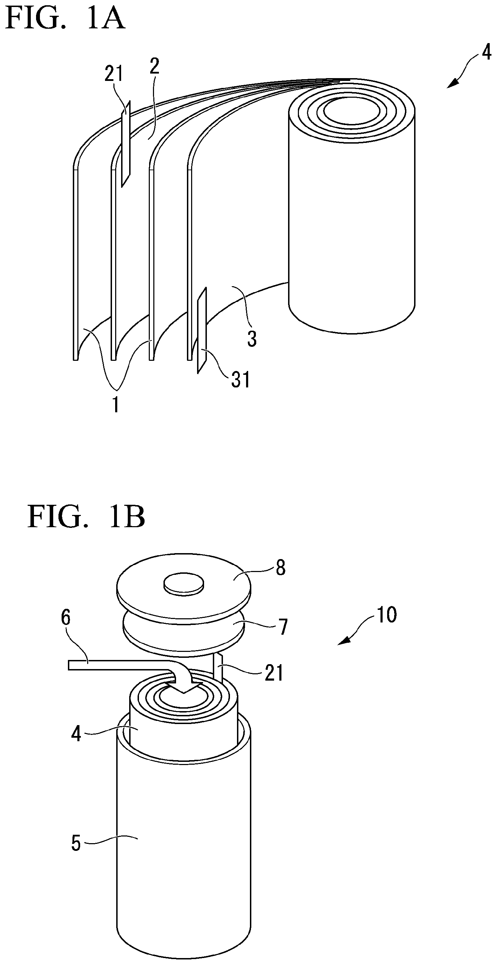

Each of FIG. 1A and FIG. 1B is a schematic view showing an example of a lithium secondary battery. A cylindrical lithium secondary battery 10 of the present embodiment is produced as follows.

First, as shown in FIG. 1A, a pair of separators 1 having a strip shape, a strip-shaped positive electrode 2 having a positive electrode lead 21 at one end, and a strip-shaped negative electrode 3 having an negative electrode lead 31 at one end are laminated in an order of the separator 1, the positive electrode 2, the separator 1, and the negative electrode 3, and are wound into an electrode group 4.

Next, as shown in FIG. 1B, after accommodating the electrode group 4 and an insulator (not shown) in a battery can 5, the bottom of the can is sealed, and then the electrode group 4 is impregnated with an electrolytic solution 6 such that an electrolyte is disposed between the positive electrode 2 and the negative electrode 3. Furthermore, by sealing an upper portion of the battery can 5 with a top insulator 7 and a sealing body 8, the lithium secondary battery 10 can be produced.

Examples of the shape of the electrode group 4 include a columnar shape so that the cross-sectional shape when the electrode group 4 is cut in the direction perpendicular to the winding axis is a circle, an ellipse, a rectangle, or a rectangle with rounded corners.

Further, as the shape of the lithium secondary battery having such an electrode group 4, the shape prescribed by IEC60086, which is a standard for batteries prescribed by the International Electrotechnical Commission (IEC), or by JIS C8500 can be adopted. Examples thereof include a cylindrical shape, an angular shape and the like.

Furthermore, the lithium secondary battery is not limited to the winding type configuration as described above, and may have a laminated type configuration in which a laminated structure of a positive electrode, a separator, a negative electrode and a separator is repeatedly overlaid. Examples of the laminated lithium secondary battery include the so-called coin-type batteries, button-type batteries and paper-type (or sheet-type) batteries.

Hereinafter, each configuration will be described in order.

(Positive electrode)

The positive electrode can be produced by first preparing a positive electrode mix containing a CAM, a conductive material and a binder, and then causing the positive electrode mix to be supported on a positive electrode current collector.

(Conductive material)

A carbon material can be used as the conductive material included in the positive electrode. Examples of the carbon material include a graphite powder, carbon black (for example, acetylene black), and a fibrous carbon material. Since carbon black is fine particles and has a large surface area, the addition of a small amount of carbon black to the positive electrode mix enhances the conductivity inside the positive electrode and improves the charge and discharge efficiency and output characteristics. However, when the carbon black is added too much, both the binding strength between the positive electrode mix and the positive electrode current collector and the binding strength inside the positive electrode mix by the binder decrease, which conversely causes an increase in internal resistance.

The ratio of the conductive material in the positive electrode mix is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease this ratio.

(Binder)

A thermoplastic resin can be used as the binder included in the positive electrode of the present embodiment. Examples of the thermoplastic resin include polyimide resins; fluororesins such as polyvinylidene fluoride (hereinafter, may be referred to as PVdF) and polytetrafluoroethylene; polyolefin resins such as polyethylene and polypropylene, and resins described in WO2019 / 098384A1 or US2020 / 0274158A1.

Two or more of these thermoplastic resins may be used in the form of a mixture thereof. When a fluororesin and a polyolefin resin are used as binders, the ratio of the fluororesin with respect to the entire positive electrode mix is set to 1% by mass or more and 10% by mass or less and the ratio of the polyolefin resin with respect to the entire positive electrode mix is set to 0.1 % by mass or more and 2% by mass, it is possible to obtain a positive electrode mix having both a high adhesive force relative to the positive electrode current collector and a high bonding force inside the positive electrode mix.

(Positive electrode current collector)

As the positive electrode current collector included in the positive electrode, it is possible to use a strip-shaped member composed of a metal material such as Al, Ni, or stainless steel as a forming material. It is particularly preferred to use a current collector which is formed of Al and is shaped into a thin film because of its high processability and low cost.

Examples of the method for causing the positive electrode mix to be supported on the positive electrode current collector include a method in which the positive electrode mix is pressure molded on the positive electrode current collector. Alternatively, the positive electrode mix may be caused to be supported on the positive electrode current collector by producing a paste from the positive electrode mix using an organic solvent, and applying the obtained paste of the positive electrode mix to at least one surface side of the positive electrode current collector, followed by drying and pressing the resultant for fixation.

Examples of the organic solvent that can be used in the case of producing the paste from the positive electrode mix include an amine-based solvent such as N,N-dimethylaminopropylamine and diethylenetriamine; an ether-based solvent such as tetrahydrofuran; a ketone-based solvent such as methyl ethyl ketone; an ester-based solvent such as methyl acetate; and an amide-based solvent such as dimethylacetamide and N-methyl-2-pyrrolidone (hereinafter, referred to as NMP in some cases).

Examples of the method for applying the paste of the positive electrode mix to the positive electrode current collector include a slit die coating method, a screen coating method, a curtain coating method, a knife coating method, a gravure coating method and an electrostatic spray method.

The positive electrode can be produced by the method as described above.

(Negative electrode)

The negative electrode included in the lithium secondary battery is not particularly limited as long as it is capable of doping and de-doping lithium ions at a potential lower than that of the positive electrode, and examples thereof include an electrode in which a negative electrode mix containing a negative electrode active material is supported on a negative electrode current collector, and an electrode composed solely of a negative electrode active material.

(Negative electrode active material)

Examples of the negative electrode active material included in the negative electrode include materials which are carbon materials, chalcogen compounds (oxides, sulfides or the like), nitrides, metals or alloys, and allow lithium ions to be doped or de-doped at a potential lower than that of the positive electrode.

Examples of the carbon material that can be used as the negative electrode active material include graphite such as natural graphite or artificial graphite, cokes, carbon black, pyrolytic carbons, carbon fibers, and calcined products of organic polymer compounds.

Examples of the oxide that can be used as the negative electrode active material include oxides of silicon represented by a formula: $SiO_x$ (here, x is a positive real number) such as $SiO_2$ and $SiO$; oxides of tin represented by a formula: $SnO_x$ (here, x is a positive real number) such as $SnO_2$ and $SnO$; and composite metal oxides containing lithium and titanium such as $Li_4Ti_5O_{12}$.

Further, examples of the metal that can be used as the negative electrode active material include lithium metal, silicon metal, tin metal, and the like.

As a material that can be used as the negative electrode active material, materials described in WO2019 / 098384A1 or US2020 / 0274158A1 may be used.

These metals and alloys are mainly used alone as an electrode after being processed into, for example, a foil.

Among the above negative electrode active materials, carbon materials containing graphite such as natural graphite and artificial graphite as a main component are preferably used for reasons that: the potential of the negative electrode hardly changes during charging from an uncharged state to a fully charged state (the potential flatness is favorable); the average discharge potential is low; the capacity retention rate at the time of repeated charge and discharge is high (the cycle characteristics are favorable); and the like. The shape of the carbon material may be, for example, any of a flake shape as in the case of natural graphite, a spherical shape as in the case of mesocarbon microbeads, a fibrous shape as in the case of a graphitized carbon fiber, or an aggregate of fine powder.

The above negative electrode mix may contain a binder, if necessary. As the binder, a thermoplastic resin can be used, and specific examples thereof include PVdF, thermoplastic polyimides, carboxymethyl cellulose (hereinafter, may be referred to as CMC), styrene-butadiene rubbers (hereinafter, may be referred to as SBR), polyethylene and polypropylene.

(Negative electrode current collector)

Examples of the negative electrode current collector included in the negative electrode include a strip-shaped member composed of a metal material such as Cu, Ni and stainless steel as a forming material. In particular, a negative electrode current collector that uses Cu as a forming material and processed into a thin film shape is preferable since Cu is unlikely to form an alloy with lithium and can be easily processed.

Examples of the method for causing the negative electrode mix to be supported on such a negative electrode current collector include, as in the case of the positive electrode, a method by pressure molding, and a method in which a paste of the negative electrode mix obtained by using a solvent or the like is applied to and dried on the negative electrode current collector, followed by pressure bonding.

(Separator)

As the separator included in the lithium secondary battery, it is possible to use, for example, a material that is composed of a material such as a polyolefin resin (such as polyethylene and polypropylene), a fluororesin or a nitrogen-containing aromatic polymer and has a form of a porous film, a nonwoven fabric, a woven fabric or the like. Further, the separator may be formed by using two or more of these materials or the separator may be formed by laminating these materials. Moreover, separators described in JP-A-2000-030686 and US20090111025A1 may be used.

In the present embodiment, for satisfactory permeation of the electrolyte during the use (at the time of charging and discharging) of the battery, the separator preferably has an air resistance of 50 sec/100 cc or more and 300 sec/100 cc or less, and more preferably 50 sec/100 cc or more and 200 sec/100 cc or less, as measured by the Gurley method prescribed in JIS P 8117.

Further, the porosity of the separator is preferably 30% by volume or more and 80% by volume or less, and more preferably 40% by volume or more and 70% by volume or less with respect to the total volume of the separator. The separator may be a laminate of separators having different porosities.

(Electrolytic solution)

The electrolytic solution included in the lithium secondary battery contains an electrolyte and an organic solvent.

Examples of the electrolyte contained in the electrolytic solution include lithium salts such as $LiClO_4$ and $LiPF_6$, and a mixture of two or more of these salts may be used. Further, electrolytes described in WO2019 / 098384A1 or US2020 / 0274158A1 may be used. Among these, as the electrolyte, it is preferable to use at least one fluorine-containing salt selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$.

Further, as the organic solvent contained in the above electrolytic solution, for example, propylene carbonate, ethylene carbonate, dimethyl carbonate, diethyl carbonate, ethyl methyl carbonate, and organic solvents described in WO2019 / 098384A1 or US2020 / 0274158A1 can be used.

As the organic solvent, it is preferable to use a mixture of two or more of these organic solvents. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has a number of features as follows: the electrolytic solution has a broad operating temperature range, does not easily deteriorate even when charged and discharged at a high current rate, does not easily deteriorate even when used for a long period of time, and does not easily decompose even in a case where a graphite material such as natural graphite or artificial graphite is used as an active material for the negative electrode.

Further, as the electrolytic solution, it is preferable to use an electrolytic solution containing a lithium salt containing fluorine such as $LiPF_6$ and an organic solvent having a fluorine substituent because the safety of the obtained lithium secondary battery is enhanced. A mixed solvent containing an ether having a fluorine substituent such as pentafluoropropyl methyl ether and 2,2,3,3-tetrafluoropropyl difluoromethyl ether and dimethyl carbonate is still more preferable since the capacity retention rate is high even when charged and discharged at a high current rate.

<All-solid-state lithium secondary battery>

Next, a positive electrode using LiMO according to one aspect of the present invention as a CAM of an all-solid-state lithium secondary battery, and an all-solid-state lithium secondary battery having this positive electrode will be described while explaining the configuration of the all-solid-state lithium secondary battery.

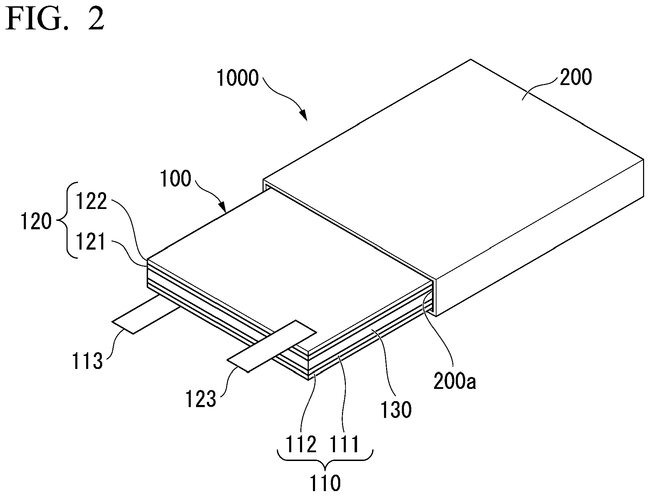

FIG. 2 is a schematic diagram showing an example of an all-solid-state lithium secondary battery of the present embodiment. An all-solid-state secondary battery 1,000 shown in FIG. 2 includes a laminate 100 having a positive electrode 110, a negative electrode 120 and a solid electrolyte layer 130, and an exterior body 200 accommodating the laminate 100. Further, the all-solid-state lithium secondary battery 1,000 may have a bipolar structure in which a CAM and a negative electrode active material are arranged on both sides of a current collector. Specific examples of the bipolar structure include structures described in JP-A-2004-95400. A material constituting each member will be described later.

The laminate 100 may have an external terminal 113 connected to a positive electrode current collector 112 and an external terminal 123 connected to a negative electrode current collector 122. In addition, the all-solid-state lithium secondary battery 1,000 may have a separator between the positive electrode 110 and the negative electrode 120.

The all-solid-state lithium secondary battery 1,000 further has an insulator (not shown) that insulates the laminate 100 and the exterior body 200 from each other, and a sealant (not shown) that seals an opening 200a of the exterior body 200.

As the exterior body 200, a container obtained by molding a metal material having high corrosion resistance such as aluminum, stainless steel or nickel-plated steel can be used. In addition, as the exterior body 200, a container obtained by processing a laminate film having at least one surface subjected to a corrosion resistant treatment into a bag shape can also be used.

Examples of the shape of the all-solid-state lithium secondary battery 1,000 include shapes such as a coin type, a button type, a paper type (or a sheet type), a cylindrical type, a square type, and a laminate type (pouch type).

Although a form of the all-solid-state lithium secondary battery 1,000 having one laminate 100 is illustrated as an example, the present embodiment is not limited thereto. The all-solid-state lithium secondary battery 1,000 may have a configuration in which the laminate 100 serves as a unit cell and a plurality of unit cells (laminates 100) are sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains the CAM according to one aspect of the present invention described above, and a solid electrolyte. Further, the positive electrode active material layer 111 may contain a conductive material and a binder.

(Solid electrolyte)

As the solid electrolyte contained in the positive electrode active material layer 111 of the present embodiment, a solid electrolyte that is lithium ion-conductive and used in a known all-solid lithium secondary battery can be adopted. Examples of such a solid electrolyte include an inorganic electrolyte and an organic electrolyte. Examples of the inorganic electrolyte include an oxide-based solid electrolyte, a sulfide-based solid electrolyte, and a hydride-based solid electrolyte. Examples of the organic electrolyte include polymer-based solid electrolytes. Examples of each electrolyte include compounds described in WO2020 / 208872A1, US2016 / 0233510A1, US2012 / 0251871A1 and US2018 / 0159169A1, and examples thereof include the following compounds.

(Oxide-based solid electrolyte)

Examples of the oxide-based solid electrolyte include perovskite-type oxides, NASICON-type oxides, LISICON-type oxides and garnet-type oxides. Specific examples of each oxide include compounds described in WO2020 / 208872A1, US2016 / 0233510A1 and US2020 / 0259213A1.

Examples of the garnet-type oxide include Li-La-Zr-based oxides such as $Li_7La_3Zr_2O_{12}$ (also referred to as LLZ).

The oxide-based solid electrolyte may be a crystalline material or an amorphous material.

(Sulfide-based solid electrolyte)

Examples of the sulfide-based solid electrolyte include $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds and $Li_{10}GeP_2S_{12}$.

It should be noted that in the present specification, the expression "-based compound" which refers to a sulfide-based solid electrolyte is used as a general term for solid electrolytes mainly containing a raw material described before the expression "-based compound" such as "$Li_2S$" and "$P_2S_5$". For example, the $Li_2S$-$P_2S_5$-based compounds include solid electrolytes mainly containing $Li_2S$ and $P_2S_5$ and further containing other raw materials. The ratio of $Li_2S$ contained

in the $Li_2S$-$P_2S_5$-based compound is, for example, 50 to 90% by mass with respect to the entire $Li_2S$-$P_2S_5$-based compound. The ratio of $P_2S_5$ contained in the $Li_2S$-$P_2S_5$-based compound is, for example, 10 to 50% by mass with respect to the entire $Li_2S$-$P_2S_5$-based compound. Further, the ratio of other raw materials contained in the $Li_2S$-$P_2S_5$-based compound is, for example, 0 to 30% by mass with respect to the entire $Li_2S$-$P_2S_5$-based compound. Moreover, the $Li_2S$-$P_2S_5$-based compounds also include solid electrolytes containing $Li_2S$ and $P_2S_5$ in different mixing ratios.

Examples of the $Li_2S$-$P_2S_5$-based compound include $Li_2S$-$P_2S_5$, $Li_2S$-$P_2S_5$-LiI, $Li_2S$-$P_2S_5$-LiCl, $Li_2S$-$P_2S_5$-LiBr and $Li_2S$-$P_2S_5$-LiI-LiBr.

Examples of the $Li_2S$-$SiS_2$-based compound include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI and $Li_2S$-$SiS_2$-$P_2S_5$-LiCl.

Examples of the $Li_2S$-$GeS_2$-based compound include $Li_2S$-$GeS_2$ and $Li_2S$-$GeS_2$-$P_2S_5$.

The sulfide-based solid electrolyte may be a crystalline material or an amorphous material.

Two or more types of solid electrolytes can be used in combination as long as the effects of the invention are not impaired.

(Conductive material and binder)

As a conductive material included in the positive electrode active material layer 111 of the present embodiment, a material described in the above-mentioned section entitled (conductive material) can be used. Further, as for the ratio of the conductive material in the positive electrode mix, the ratio described in the above-mentioned section entitled (conductive material) can be applied in a similar manner. Moreover, as a binder included in the positive electrode, a material described in the above-mentioned section entitled (binder) can be used.

(Positive electrode current collector)

As the positive electrode current collector 112 included in the positive electrode 110 of the present embodiment, a material described in the above-mentioned section entitled (positive electrode current collector) can be used.

Examples of the method for causing the positive electrode active material layer 111 to be supported on the positive electrode current collector 112 include a method in which the positive electrode active material layer 111 is pressure molded on the positive electrode current collector 112. A cold press or a hot press can be used for pressure molding.

Further, the positive electrode active material layer 111 may be caused to be supported on the positive electrode current collector 112 by producing a positive electrode mix from a paste of a mixture of CAM, a solid electrolyte, a conductive material and a binder using an organic solvent, and applying the obtained positive electrode mix on at least one surface of the positive electrode current collector 112, followed by drying and pressing the resultant for fixation.

Alternatively, the positive electrode active material layer 111 may be caused to be supported on the positive electrode current collector 112 by producing a positive electrode mix from a paste of a mixture of CAM, a solid electrolyte and a conductive material using an organic solvent, and applying the obtained positive electrode mix on at least one surface of the positive electrode current collector 112, followed by drying and sintering.

As the organic solvent that can be used for the positive electrode mix, the same organic solvent that can be used when the positive electrode mix described above in the section entitled (positive electrode current collector) is formed into a paste can be used.

Examples of the method for applying the positive electrode mix on the positive electrode current collector 112 include the method described in the above-mentioned section entitled (positive electrode current collector).

The positive electrode 110 can be produced by the method as described above.

(Negative electrode)

The negative electrode 120 has a negative electrode active material layer 121 and a negative electrode current collector 122. The negative electrode active material layer 121 contains a negative electrode active material. Further, the negative electrode active material layer 121 may contain a solid electrolyte and a conductive material. As the negative electrode active material, the negative electrode current collector, the solid electrolyte, the conductive material and the binder, those described above can be used.

Examples of the method for causing the negative electrode active material layer 121 to be supported on the negative electrode current collector 122 include, as in the case of the positive electrode 110, a method by pressure molding, a method in which a negative electrode mix in the form of a paste containing a negative electrode active material is applied to and dried on the negative electrode current collector 122, followed by pressure bonding, and a method in which a negative electrode mix in the form of a paste containing a negative electrode active material is applied to and dried on the negative electrode current collector 122, followed by sintering.

(Solid electrolyte layer)

A solid electrolyte layer 130 includes the above-mentioned solid electrolyte.

The solid electrolyte layer 130 can be formed by depositing a solid electrolyte of an inorganic substance on the surface of the positive electrode active material layer 111 included in the above-mentioned positive electrode 110 by a sputtering method.

Further, the solid electrolyte layer 130 can be formed by applying and drying a paste-like mix containing a solid electrolyte on the surface of the positive electrode active material layer 111 included in the above-mentioned positive electrode 110. After drying, the solid electrolyte layer 130 may be formed by press molding and further pressurizing by a cold isostatic pressing method (CIP).

The laminate 100 can be produced by laminating the negative electrode 120 on the solid electrolyte layer 130 provided on the positive electrode 110 as described above by using a known method so that the negative electrode active material layer 121 comes into contact with the surface of the solid electrolyte layer 130.

Since the CAM having the above configuration uses the LiMO produced by the present embodiment as described above, the rate characteristics of the lithium secondary battery using the CAM can be improved.

Further, since the positive electrode having the above configuration has a CAM having the above-mentioned configuration, the rate characteristics of the lithium secondary battery can be improved.

Furthermore, since the lithium secondary battery having the above configuration includes the above-mentioned positive electrode, it is a secondary battery having high rate characteristics.

[Examples]

Next, the present invention will be described in more detail with reference to examples.

<Measurement of tap density>

A value obtained by the method described in JIS R 1628-1997 was used for the tap density of a nickel cobalt manganese zirconium composite hydroxide or a nickel cobalt manganese composite hydroxide produced by the method described later.

<Composition analysis>

The composition analysis of LiMO produced by the method described later was carried out using an ICP emission spectrophotometer (SPS3000 manufactured by SII Nanotechnology Inc.) after the obtained LiMO powder was dissolved in hydrochloric acid.

<Three-dimensional image analysis of LiMO>

First, 10 parts by weight of LiMO in a powder form was dispersed in 100 parts by weight of an epoxy resin. After that, vacuum degassing was performed, and the obtained product was poured into a silicon mold and cured. As a result, a cured product of resin containing LiMO was obtained.

After fixing the obtained cured product on a stage, a protective film was formed by Pt-Pd deposition and set in a focused ion beam processing observation device <FIB-SEM (product name: HELIOS600), manufactured by FEI>.

Next, a cross section was produced by FIB processing at an acceleration voltage of 30 kV, and the cross section was observed by SEM at an acceleration voltage of 2.1 kV.

After observation, a new cross section was produced by FIB processing to a thickness of 100 nm in the depth direction of the sample, and the cross section was observed by SEM.

With a 100 nm interval, the FIB processing and cross-sectional observation by SEM were repeated as described above at regular intervals to acquire 200 or more continuous images. The acquired image was subjected to position correction using image analysis software [Avizo ver. 6.0 manufactured by Visualization Sciences Group] to obtain a continuous slice image. Scales were set at 105 nm/pix on the X-axis, 105 nm/pix on the Y-axis, and 100 nm/pix on the Z-axis.

The obtained continuous slice image was subjected to three-dimensional quantitative analysis of LiMO primary particles using quantitative analysis software (product name: TRI/3D-PRT (manufactured by Ratoc System Engineering Co., Ltd.), which is an optional analysis system of TRI/3D-BON-FCS).

The above three-dimensional quantitative analysis was performed by randomly selecting 100 or more primary particles having an equivalent spherical diameter of 1.0 $\mu$m or more from the particulate LiMO.

As a result, the values of V, La, Lb and Lc described below were obtained.

V: Volume of a primary particle of LiMO.

La: Height of a rectangular parallelepiped circumscribing the primary particle of LiMO.

Lb: Vertical length of the bottom surface of the rectangular parallelepiped circumscribing the primary particle of LiMO.

Lc: Horizontal length of the bottom surface of the rectangular parallelepiped circumscribing the primary particle of LiMO.

Further, a rotating body was obtained by rotating the primary particle with the above quantitative analysis software. The rotating body was obtained by the above method.

A major axis 2a and a minor axis 2c of the obtained rotating body were determined.

The major axis 2a and minor axis 2c of the rotating body were obtained by the above method.

<Method for measuring equivalent spherical diameter >

Using the value of V obtained by the above analysis, the equivalent spherical diameter was calculated by the following formula (2).

The equivalent spherical diameter ($\varphi$) of a primary particle indicates the diameter of a sphere when the volume (V) of a certain primary particle is converted into that of a complete sphere.

$$\text{Equivalent spherical diameter } (\varphi) = 2 \times (3/4 \times V/\pi)^{1/3} \quad (2)$$

<Measurement of $SD_{10}$, $SD_{50}$, and $SD_{90}$ of equivalent spherical diameter s >

100 or more primary particles having an equivalent spherical diameter of 1.0 $\mu$m or more were randomly selected from the particulate LiMO, and a volume-based cumulative frequency distribution curve was obtained by calculating the equivalent spherical diameter for each of them by the above method. In the obtained cumulative frequency distribution curve, when the total cumulative volume was taken as 100%, a point at which the cumulative frequency was 10% was defined as $SD_{10}$, a point at which the cumulative frequency was 50% was defined as $SD_{50}$, and a point at which the cumulative frequency was 90% was defined as $SD_{90}$ from the side with a smaller equivalent spherical diameter.

<Measurement of average three-dimensional particle unevenness>

Using the respective values (La, Lb, Lc and V) obtained by the above three-dimensional image analysis, the three-dimensional particle unevenness of each primary particle contained in LiMO was calculated by the following formula (1).

$$\text{Three-dimensional particle unevenness} = (La \times Lb \times Lc) / V \quad (1)$$

The average three-dimensional particle unevenness was obtained by calculating an average value of the three-dimensional particle unevenness of 100 or more primary particles having an equivalent spherical diameter of at least 1.0 $\mu$m.

<Method for measuring aspect ratio>

An aspect ratio (2a/2c) of each particle was obtained using the values of the major axis 2a and the minor axis 2c obtained by the above three-dimensional image analysis.

<Measurement of average value of aspect ratio>

From the obtained aspect ratios (2a/2c) of each of 100 or more primary particles, the average value of aspect ratios of the primary particles having an equivalent spherical diameter of at least 1.0 $\mu$m was obtained.

Furthermore, an average value (A1) of aspect ratios of the primary particles having an equivalent spherical diameter within a range of $SD_{10}$ or more and $SD_{50}$ or less and an average value (A2) of the aspect ratios of the primary particles having an equivalent spherical diameter within a range of $SD_{50}$ or more and $SD_{90}$ or less were calculated.

<Production of positive electrode for lithium secondary battery>

LiMO obtained by the production method described later, a conductive material (acetylene black) and a binder (PVdF) were added and kneaded so as to achieve a composition of LiMO: conductive material: binder = 92: 5: 3 (mass ratio) to prepare a positive electrode mix in the form of a paste. N-methyl-2-pyrrolidone was used as an organic solvent at the time of preparing the positive electrode mix.

The obtained positive electrode mix was applied to an Al foil having a thickness of 40 $\mu$m to serve as a current collector, dried at 60°C for 1 hour, and vacuum dried at 150°C for 8 hours to obtain a positive electrode for a lithium secondary battery. The electrode area of the positive electrode for a lithium secondary battery was 1.77 cm$^2$.

<Production of lithium secondary battery (coin type half cell)>

The following operations were performed in a glove box with an argon atmosphere.

The positive electrode for a lithium secondary battery produced in the section entitled <Production of positive electrode for lithium secondary battery> was placed on a lower lid of a part for a coin-type battery R2032 (manufactured by Hohsen Corporation) with the aluminum foil surface facing down, and a separator (porous polyethylene film) was placed thereon. 300 $\mu$l of an electrolytic solution was injected thereinto. As the electrolytic solution, a mixture solution of ethylene carbonate, dimethyl carbonate and ethyl methyl carbonate at a ratio of 30:35:35 (volume ratio) in which LiPF$_6$ was dissolved at a ratio of 1.0 mol/l was used.

Next, using metallic lithium as an negative electrode, the negative electrode was placed on the upper side of a laminate film separator, covered with an upper lid through a gasket, and swaged using a swaging machine to produce a lithium secondary battery (coin-type half cell R2032, hereinafter may be referred to as "half cell").

<Measurement of initial charge and discharge efficiency>

Using the half cell produced in the section entitled <Production of lithium secondary battery (coin type half cell)>, an initial charge and discharge test was carried out under conditions shown below.

<Initial charge and discharge test conditions>

Test temperature: 25°C

Constant current/constant voltage charge: maximum charge voltage of 4.3 V, charge time of 6 hours, and charge current of 0.2 CA

Constant current discharge: minimum discharge voltage of 2.5 V, discharge time of 5 hours, and discharge current of 0.2 CA

<Measurement of discharge rate characteristics>

A 10 CA/0.2 CA discharge capacity ratio was obtained by the following formula using the discharge capacity when discharged at a constant current of 0.2 CA and the discharge capacity when discharged at a constant current of 10 CA, and was used as an indicator of the discharge rate characteristics. The higher the 10 CA/0.2 CA discharge capacity ratio, the higher the discharge rate characteristics, which means that the lithium secondary battery exhibits higher output.

- 10 CA/0.2 CA discharge capacity ratio

$$10 \text{ CA}/0.2 \text{ CA discharge capacity ratio } (\%)$$
$$= (\text{discharge capacity at } 10 \text{ CA}) / (\text{discharge capacity at } 0.2 \text{ CA}) \times 100$$

<<Example 1>>

1. Production of LiMO (A1)

After putting water in a reaction vessel equipped with a stirrer and an overflow pipe, an aqueous sodium hydroxide solution was added, and the liquid temperature was maintained at 50°C.

An aqueous nickel sulfate solution, an aqueous cobalt sulfate solution, an aqueous manganese sulfate solution, and zirconium sulfate were mixed so that the atomic ratio of nickel atoms, cobalt atoms, manganese atoms and zirconium atoms was 0.60: 0.20: 0.20: 0.005 to prepare a raw material mixture solution.

Next, nitrogen gas was continuously ventilated into the reaction vessel to create a nitrogen atmosphere, and then the raw material mixture solution and an aqueous ammonium sulfate solution as a complexing agent were continuously added under stirring. While maintaining the solution temperature in the reaction vessel at 50°C, an aqueous sodium hydroxide solution was appropriately added dropwise so that the pH of the solution became 12.0 (measured value at an aqueous solution temperature of 40°C) to obtain nickel cobalt manganese zirconium composite hydroxide particles. The obtained nickel cobalt manganese zirconium composite hydroxide particles were washed and then dehydrated with a centrifugal separator, washed, dehydrated, isolated, and dried at 105°C, followed by a sieving treatment to obtain a nickel cobalt manganese zirconium composite hydroxide A1.

The tap density of the nickel cobalt manganese zirconium composite hydroxide A1 was 1.65 g/cc.

The nickel cobalt manganese zirconium composite hydroxide A1, a lithium hydroxide monohydrate powder and a potassium sulfate powder were weighed and mixed so that Li / (Ni + Co + Mn) = 1.07 (mol / mol), and a mixing ratio of K and Li elements was $K_2SO_4$ / ($LiOH + K_2SO_4$) = 0.1 (mol / mol). The mixture was calcined at 650°C for 5 hours in an oxygen atmosphere, and then the calcined product was crushed. After crushing, the resulting product was calcined at 940°C for 5 hours in an oxygen atmosphere, and the calcined product was crushed. The obtained powder after crushing and pure water whose liquid temperature was adjusted to 5°C were mixed so that the ratio of the weight of the powder with respect to the total amount was 0.3, and the produced slurry was stirred for 20 minutes and then dehydrated. Furthermore, the resulting product was washed with a shower of water having twice the weight of the above powder using pure water adjusted to a liquid temperature of 5°C, and was then dehydrated to obtain a wet cake A1.

LiMO (A1) having a layered structure was obtained by spreading the above wet cake A1 in a sagger, and placing the sagger in a static state in a calcining furnace set at a temperature of 760°C to perform a heat treatment. As a result of the composition analysis of LiMO (A1), in the composition formula (I), x = 0.020, y = 0.198, z = 0.195, and w = 0.004.

<<Example 2>>

1. Production of LiMO (A2)

After putting water in a reaction vessel equipped with a stirrer and an overflow pipe, an aqueous sodium hydroxide solution was added, and the liquid temperature was maintained at 60°C.

An aqueous nickel sulfate solution, an aqueous cobalt sulfate solution and an aqueous manganese sulfate solution were mixed so that the atomic ratio of nickel atoms, cobalt atoms and manganese atoms was 0.60: 0.20: 0.20 to prepare a raw material mixture solution.

Next, nitrogen gas was continuously ventilated into the reaction vessel to create a nitrogen atmosphere, and then the raw material mixture solution and an aqueous ammonium sulfate solution as a complexing agent were continuously added under stirring. While maintaining the solution temperature in the reaction vessel at 60°C, an aqueous sodium hydroxide solution was appropriately added dropwise so that the pH of the solution became 12.2 (measured value at an aqueous solution temperature of 40°C) to obtain nickel cobalt manganese composite hydroxide particles. The obtained nickel cobalt manganese composite hydroxide particles were washed and then dehydrated with a centrifugal separator, washed, dehydrated, isolated, and dried at 105°C, followed by a sieving treatment to obtain a nickel cobalt manganese composite hydroxide A2.

The tap density of the nickel cobalt manganese composite hydroxide A2 was 1.88 g/cc.

The nickel cobalt manganese composite hydroxide A2, a lithium hydroxide monohydrate powder and a potassium sulfate powder were weighed and mixed so that Li / (Ni + Co + Mn) = 1.26 (mol / mol), and a mixing ratio of K and Li elements was $K_2SO_4$ / ($LiOH + K_2SO_4$) = 0.1 (mol / mol). The mixture was calcined at 650°C for 5 hours in an oxygen atmosphere, and then the calcined product was crushed. After crushing, the resulting product was calcined at 925°C for 5 hours in an oxygen atmosphere, and the calcined product was crushed. The obtained powder after crushing and pure water whose liquid temperature was adjusted to 5°C were mixed so that the ratio of the weight of the powder with respect to the total amount was 0.3, and the produced slurry was stirred for 20 minutes and then dehydrated. Furthermore, the resulting product was washed with a shower of water having twice the weight of the above powder using pure water adjusted to a liquid temperature of 5°C, and was then dehydrated to obtain a wet cake A2.

LiMO (A2) having a layered structure was obtained by spreading the above wet cake A2 in a sagger, and placing the sagger in a static state in a vacuum dryer set at a temperature of 80°C and subjecting it to a vacuum for 8 hours, followed by vacuum drying at 150°C. As a result of the composition analysis of LiMO (A2), in the composition formula (I), x = 0.065, y = 0.200, z = 0.200 and w = 0.000.

<<Example 3>>

1. Production of LiMO (A3)

After putting water in a reaction vessel equipped with a stirrer and an overflow pipe, an aqueous sodium hydroxide solution was added, and the liquid temperature was maintained at 70°C.

An aqueous nickel sulfate solution, an aqueous cobalt sulfate solution, an aqueous manganese sulfate solution, and zirconium sulfate were mixed so that the atomic ratio of nickel atoms, cobalt atoms, manganese atoms and zirconium atoms was 0.60: 0.20: 0.20: 0.004 to prepare a raw material mixture solution.

Next, nitrogen gas was continuously ventilated into the reaction vessel to create a nitrogen atmosphere, and then the raw material mixture solution was continuously added under stirring. While maintaining the solution temperature in the reaction vessel at 70°C, an aqueous sodium hydroxide solution was appropriately added dropwise so that the pH of the solution became 10.5 (measured value at an aqueous solution temperature of 40°C) to obtain nickel cobalt manganese zirconium composite hydroxide particles. The obtained nickel cobalt manganese zirconium composite hydroxide particles were washed and then dehydrated with a centrifugal separator, washed, dehydrated, isolated, dried at 105°C, and then crushed and sieved to obtain a nickel cobalt manganese zirconium composite hydroxide A3.

The tap density of the nickel cobalt manganese zirconium composite hydroxide A3 was 1.14 g/cc.

The nickel cobalt manganese zirconium composite hydroxide A3, a lithium hydroxide monohydrate powder and a potassium sulfate powder were weighed and mixed so that Li / (Ni + Co + Mn) = 1.07 (mol / mol), and a mixing ratio of K and Li elements was $K_2SO_4 / (LiOH + K_2SO_4)$ = 0.1 (mol / mol). The mixture was calcined at 650°C for 5 hours in an oxygen atmosphere, and then the calcined product was crushed. After crushing, the resulting product was calcined at 960°C for 5 hours in an oxygen atmosphere, and the calcined product was crushed. The obtained powder after crushing and pure water whose liquid temperature was adjusted to 5°C were mixed so that the ratio of the weight of the powder with respect to the total amount was 0.3, and the produced slurry was stirred for 20 minutes and then dehydrated. Furthermore, the resulting product was washed with a shower of water having twice the weight of the above powder using pure water adjusted to a liquid temperature of 5°C, and was then dehydrated to obtain a wet cake A3.

LiMO (A3) having a layered structure was obtained by spreading the above wet cake A3 in a sagger, and placing the sagger in a static state in a vacuum dryer set at a temperature of 80°C and subjecting it to a vacuum for 8 hours, followed by vacuum drying at 150°C. As a result of the composition analysis of LiMO (A3), in the composition formula (I), x = 0.003, y = 0.198, z = 0.200 and w = 0.004.

<<Example 4>>

1. Production of LiMO (A4)

The nickel cobalt manganese zirconium composite hydroxide A3, a lithium hydroxide monohydrate powder and a potassium sulfate powder were weighed and mixed so that Li / (Ni + Co + Mn) = 1.10 (mol / mol), and a mixing ratio of K and Li elements was $K_2SO_4 / (LiOH + K_2SO_4)$ = 0.1 (mol / mol). The mixture was calcined at 650°C for 5 hours in an oxygen atmosphere, and then the calcined product was crushed. After crushing, the resulting product was calcined at 960°C for 5 hours in an oxygen atmosphere, and the calcined product was crushed. The obtained powder after crushing and pure water whose liquid temperature was adjusted to 5°C were mixed so that the ratio of the weight of the powder with respect to the total amount was 0.3, and the produced slurry was stirred for 20 minutes and then dehydrated.

Furthermore, the resulting product was washed with a shower of water having twice the weight of the above powder using pure water adjusted to a liquid temperature of 5°C, and was then dehydrated to obtain a wet cake A4.

LiMO (A4) having a layered structure was obtained by spreading the above wet cake A4 in a sagger, and placing the sagger in a static state in a vacuum dryer set at a temperature of 80°C and subjecting it to a vacuum for 8 hours, followed by vacuum drying at 150°C. As a result of the composition analysis of LiMO (A4), in the composition formula (I), x = 0.011, y = 0.198, z = 0.199 and w = 0.004.

<<Example 5>>

1. Production of LiMO (A5)

After putting water in a reaction vessel equipped with a stirrer and an overflow pipe, an aqueous sodium hydroxide solution was added, and the liquid temperature was maintained at 60°C.

An aqueous nickel sulfate solution, an aqueous cobalt sulfate solution and an aqueous manganese sulfate solution were mixed so that the atomic ratio of nickel atoms, cobalt atoms and manganese atoms was 0.91: 0.05: 0.04 to prepare a raw material mixture solution.

Next, nitrogen gas was continuously ventilated into the reaction vessel to create a nitrogen atmosphere, and then the raw material mixture solution and an aqueous ammonium sulfate solution as a complexing agent were continuously added under stirring. While maintaining the solution temperature in the reaction vessel at 60°C, an aqueous sodium hydroxide solution was appropriately added dropwise so that the pH of the solution became 11.6 (measured value at an aqueous solution temperature of 40°C) to obtain nickel cobalt manganese composite hydroxide particles. The obtained nickel cobalt manganese composite hydroxide particles were washed and then dehydrated with a centrifugal separator, washed, dehydrated, isolated, dried at 105°C, and then crushed and sieved to obtain a nickel cobalt manganese composite hydroxide A5.

The tap density of the nickel cobalt manganese composite hydroxide A5 was 1.67 g/cc.

The nickel cobalt manganese composite hydroxide A5 was calcined at 650°C in an oxygen atmosphere, and the calcined powder, a lithium hydroxide monohydrate powder and a potassium sulfate powder were weighed and mixed so that Li / (Ni + Co + Mn) = 1.10 (mol / mol), and a mixing ratio of K and Li elements was $K_2SO_4$ / (LiOH + $K_2SO_4$) = 0.1 (mol / mol). The mixture was calcined at 850°C for 5 hours in an oxygen atmosphere, and the calcined product was crushed. The obtained powder after crushing and pure water whose liquid temperature was adjusted to 5°C were mixed so that the ratio of the weight of the powder with respect to the total amount was 0.3, and the produced slurry was stirred for 20 minutes and then dehydrated. Furthermore, the resulting product was washed with a shower of water having twice the weight of the above powder using pure water adjusted to a liquid temperature of 5°C, and was then dehydrated to obtain a wet cake A5.

LiMO (A5) having a layered structure was obtained by spreading the above wet cake A5 in a sagger, and placing the sagger in a static state in a calcining furnace set at a temperature of 760°C to perform a heat treatment. As a result of the composition analysis of LiMO (A5), in the composition formula (I), x = 0.000, y = 0.050, z = 0.040 and w = 0.000.

<<Comparative Example 1>>

1. Production of LiMO (C1)

After putting water in a reaction vessel equipped with a stirrer and an overflow pipe, an aqueous sodium hydroxide solution was added, and the liquid temperature was maintained at 70°C.

An aqueous nickel sulfate solution, an aqueous cobalt sulfate solution, an aqueous manganese sulfate solution, and zirconium sulfate were mixed so that the atomic ratio of nickel atoms, cobalt atoms, manganese atoms and zirconium atoms was 0.60: 0.20: 0.20: 0.005 to prepare a raw material mixture solution.

Next, nitrogen gas was continuously ventilated into the reaction vessel to create a nitrogen atmosphere, and then the raw material mixture solution was continuously added under stirring. While maintaining the solution temperature in the reaction vessel at 70°C, an aqueous sodium hydroxide solution was appropriately added dropwise so that the pH of the solution became 10.6 (measured value at an aqueous solution temperature of 40°C) to obtain nickel cobalt manganese zirconium composite hydroxide particles. The obtained nickel cobalt manganese zirconium composite hydroxide particles were washed and then dehydrated with a centrifugal separator, washed, dehydrated, isolated, and dried at 105°C, followed by a sieving treatment to obtain a nickel cobalt manganese zirconium composite hydroxide C1.

The tap density of the nickel cobalt manganese zirconium composite hydroxide C1 was 1.05 g/cc.

The nickel cobalt manganese zirconium composite hydroxide C1 and a lithium hydroxide monohydrate powder were weighed and mixed so that Li / (Ni + Co + Mn) = 1.04 (mol / mol). The mixture was calcined at 650°C for 5 hours in an oxygen atmosphere, and then the calcined product was crushed. After crushing, the resulting product was calcined at 1,015°C for 5 hours in an oxygen atmosphere, and the calcined product was crushed to obtain LiMO (C1) having a layered structure. As a result of the composition analysis of LiMO (C1), in the composition formula (I), x = 0.023, y = 0.197, z = 0.195 and w = 0.004.

Table 1 below summarizes the physical characteristics in Examples 1 to 5 and Comparative Example 1 and the discharge rate characteristics (10 C/0.2 C).

[Table 1]

| | Spherical equivalent diameter (= SD) | | | | Average three-dimensional particle unevenness | Average value of aspect ratios of primary particles | Average value of aspect ratio | | 10 C/ 0.2 C |
|---|---|---|---|---|---|---|---|---|---|
| | $SD_{10}$ | $SD_{50}$ | $SD_{90}$ | $(SD_{90} - SD_{10}) / SD_{50}$ | | | $SD_{10}$ or more and $SD_{50}$ or less | $SD_{50}$ or more and $SD_{90}$ or less | % |
| | | | | | | | (A1) | (A2) | |
| Ex. 1 | 1.7 | 2.7 | 3.7 | 0.75 | 2.6 | 1.6 | 1.7 | 1.7 | 75.6 |
| Ex. 2 | 2.1 | 3.2 | 4.7 | 0.82 | 2.5 | 1.8 | 1.7 | 1.6 | 65.8 |
| Ex. 3 | 1.9 | 3.0 | 4.1 | 0.73 | 2.3 | 1.6 | 1.6 | 1.6 | 74.6 |
| Ex. 4 | 2.3 | 3.6 | 5.4 | 0.87 | 2.3 | 1.7 | 1.5 | 1.5 | 74.4 |
| Ex. 5 | 1.8 | 3.1 | 4.5 | 0.87 | 2.7 | 1.7 | 1.8 | 1.8 | 72.6 |
| Comp. Ex. 1 | 2.1 | 5.6 | 7.1 | 0.88 | 2.9 | 2.4 | 2.1 | 1.6 | 32.7 |

As shown in Table 1, all of Examples 1 to 5 had better discharge rate characteristics than those in Comparative Example 1.

[Reference Signs List]

1: Separator; 2: Positive electrode; 3: Negative electrode; 4: Electrode group; 5: Battery can; 6: Electrolytic solution; 7: Top insulator; 8: Sealing body; 10: Lithium secondary battery; 21: Positive electrode lead; 31: Negative electrode lead; 100: Laminate; 110: Positive electrode; 111: Positive electrode active material layer; 112: Positive electrode current collector; 113: External terminal; 120: Negative electrode; 121: Negative electrode active material layer; 122: Negative electrode current collector; 123: External terminal; 130: Solid electrolyte layer; 200: Exterior body; 200a: Opening; 1,000: All-solid-state lithium secondary battery

## Claims

1. A lithium metal composite oxide having a layered structure, and comprising at least Li, Ni, and an element X, wherein:

   said element X is at least one element selected from the group consisting of Co, Mn, Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn; and
   an average three-dimensional particle unevenness of primary particles with an equivalent spherical diameter of at least 1.0 $\mu$m is 1.91 or more and less than 2.9.

2. The lithium metal composite oxide according to Claim 1,
   wherein an average value of aspect ratios of said primary particles with an equivalent spherical diameter of at least 1.0 $\mu$m is 1.0 or more and 2.3 or less.

3. The lithium metal composite oxide according to Claim 1 or 2,

   wherein in a cumulative frequency distribution curve of an equivalent spherical diameter of said primary particles, when the total cumulative volume is taken as 100%, a point at which a cumulative frequency reaches 10% is taken as $SD_{10}$, and a point at which a cumulative frequency reaches 50% is taken as $SD_{50}$ from a side with a smaller equivalent spherical diameter,
   an average value of aspect ratios of primary particles having an equivalent spherical diameter within a range of $SD_{10}$ or more and $SD_{50}$ or less is 1.0 or more and 2.0 or less.

4. The lithium metal composite oxide according to any one of Claims 1 to 3,

wherein in a cumulative frequency distribution curve of an equivalent spherical diameter of said primary particles, when the total cumulative volume is taken as 100%, a point at which a cumulative frequency reaches 10% is taken as $SD_{10}$, a point at which a cumulative frequency reaches 50% is taken as $SD_{50}$, and a point at which a cumulative frequency reaches 90% is taken as $SD_{90}$ from a side with a smaller equivalent spherical diameter, an average value of aspect ratios of primary particles having an equivalent spherical diameter within a range of $SD_{50}$ or more and $SD_{90}$ or less is equal to or less than an average value of aspect ratios of primary particles having an equivalent spherical diameter within a range of $SD_{10}$ or more and $SD_{50}$ or less.

5. The lithium metal composite oxide according to any one of Claims 1 to 4, which satisfies the following formula (I),

$$Li[Li_x(Ni_{(1-y-z-w)}Co_yMn_zX1_w)_{1-x}]O_2 \qquad (I)$$

(wherein $-0.1 \leq x \leq 0.2$, $0 \leq y \leq 0.4$, $0 \leq z \leq 0.4$, $0 \leq w \leq 0.1$, and $0 < y + z + w < 1$ are satisfied, and X1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In and Sn.)

6. The lithium metal composite oxide according to any one of Claims 1 to 5,

wherein in a cumulative frequency distribution curve of an equivalent spherical diameter of said primary particles, when the total cumulative volume is taken as 100% and a point at which a cumulative frequency reaches 50% is taken as $SD_{50}$ from a side with a smaller equivalent spherical diameter,
$SD_{50}$ is 1.5 $\mu$m or more and 10 $\mu$m or less.

7. The lithium metal composite oxide according to any one of Claims 1 to 6,

wherein in a cumulative frequency distribution curve of an equivalent spherical diameter of said primary particles, when the total cumulative volume is taken as 100%, a point at which a cumulative frequency reaches 10% is taken as $SD_{10}$, a point at which a cumulative frequency reaches 50% is taken as $SD_{50}$, and a point at which a cumulative frequency reaches 90% is taken as $SD_{90}$ from a side with a smaller equivalent spherical diameter, $(SD_{90} - SD_{10}) / SD_{50}$ is 0.30 or more and 0.87 or less.

8. A positive electrode active material for a lithium secondary battery, the positive electrode active material comprising the lithium metal composite oxide according to any one of Claims 1 to 7.

9. A positive electrode for a lithium secondary battery, the positive electrode comprising the positive electrode active material for a lithium secondary battery according to Claim 8.

10. A lithium secondary battery comprising the positive electrode for a lithium secondary battery according to Claim 9.

# FIG. 1A

# FIG. 1B

FIG. 2

## INTERNATIONAL SEARCH REPORT

International application No.

PCT/JP2020/046372

### A. CLASSIFICATION OF SUBJECT MATTER
C01G 53/00(2006.01)i; H01M 4/505(2010.01)i; H01M 4/525(2010.01)i
FI: C01G53/00 A; H01M4/505; H01M4/525

According to International Patent Classification (IPC) or to both national classification and IPC

### B. FIELDS SEARCHED

Minimum documentation searched (classification system followed by classification symbols)
C01G53/00; H01M4/505; H01M4/525

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-160572 A (SUMITOMO CHEMICAL CO., LTD.) 19 September 2019 (2019-09-19) entire text, all drawings | 1–10 |
| A | JP 2005-222953 A (SAMSUNG SDI CO., LTD.) 18 August 2005 (2005-08-18) entire text, all drawings | 1–10 |
| A | JP 2014-515541 A (HUBEI WANRUN NEW ENERGY TECHNOLOGY DEVELOPMENT CO., LTD.) 30 June 2014 (2014-06-30) entire text, all drawings | 1–10 |
| P, A | JP 2020-100525 A (SUMITOMO CHEMICAL CO., LTD.) 02 July 2020 (2020-07-02) entire text, all drawings | 1–10 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 February 2021 (02.02.2021) | 09 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

| International application No. |
|---|
| PCT/JP2020/046372 |

| Patent Documents referred in the Report | Publication Date | Patent Family | Publication Date |
|---|---|---|---|
| JP 2019-160572 A | 19 Sep. 2019 | WO 2019/177023 A1 | |
| JP 2005-222953 A | 18 Aug. 2005 | US 2005/0175897 A1 entire text, all drawings KR 10-2005-0079782 A CN 1652375 A | |
| JP 2014-515541 A | 30 Jun. 2014 | US 2014/0170492 A1 entire text, all drawings WO 2012/159253 A1 EP 2717360 A1 KR 10-2014-0014289 A | |
| JP 2020-100525 A | 02 Jul. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019225318 A
- JP 2006114408 A
- JP 2002201028 A
- WO 2019098384 A1
- US 20200274158 A1
- JP 2000030686 A
- US 20090111025 A1

- JP 2004095400 A
- WO 2020208872 A1
- US 20160233510 A1
- US 20120251871 A1
- US 20180159169 A1
- US 20200259213 A1